# EUROPÄISCHE PATENTSCHRIFT

(11) **EP 4 538 550 B1**
(45) Veröffentlichungstag und Bekanntmachung des Hinweises auf die Patenterteilung: **18.03.2026**
(21) Anmeldenummer: 23202808.4
(22) Anmeldetag: 10.10.2023
(51) Int. Cl.: F16B 39/284, B22F 10/25, B33Y 80/00, F16B 39/286, F16B 39/34, F16B 41/00, F16B 35/04, B22F 5/10, B22F 10/00, F16B 5/02, F16B 33/00

(54) **ADDITIV HERGESTELLTES BAUTEIL, BAUTEILVERBUND MIT DEM BAUTEIL, HERSTELLUNGSVERFAHREN DES BAUTEILS UND VERBINDUNGSVERFAHREN ZUR HERSTELLUNG DES BAUTEILVERBUNDS**
COMPONENT PRODUCED BY ADDITIVE MANUFACTURING, COMPONENT COMPOSITE WITH THE COMPONENT, METHOD FOR PRODUCING THE COMPONENT AND CONNECTION METHOD FOR PRODUCING THE COMPONENT COMPOSITE
COMPOSANT FABRIQUÉ DE MANIÈRE ADDITIVE, ASSEMBLAGE DE COMPOSANTS COMPRENANT LE COMPOSANT, PROCÉDÉ DE FABRICATION DU COMPOSANT ET PROCÉDÉ DE LIAISON POUR LA FABRICATION DU COMPOSITE DE COMPOSANTS

(43) Veröffentlichungstag der Anmeldung: 16.04.2025
(73) Patentinhaber: Böllhoff Verbindungstechnik GmbH, 33649 Bielefeld (DE)
(72) Erfinder: DRAHT, Torsten, 33758 Schloß Holte-Stukenbrock (DE); BRAND, Michael, 33014 Bad Driburg (DE); MÖHRING, Jörg, 33106 Paderborn (DE)
(74) Vertreter: HWP Intellectual Property

(56) Entgegenhaltungen:
- EP-A2- 2 000 682
- FR-A1- 2 561 328
- TW-B- I 673 439
- US-A- 3 522 830
- US-A1- 2014 286 727

## Beschreibung

### 1. Gebiet der Erfindung

Die vorliegende Erfindung betrifft ein additiv hergestelltes Bauteil mit einem Loch, ein additiv hergestelltes Bauteil mit einem Vorsprung, einen Bauteilverbund mit dem additiv hergestellten Bauteil mit Loch sowie einen Bauteilverbund mit dem additiv hergestellten Bauteil mit Vorsprung. Ebenso betrifft die vorliegende Erfindung ein Herstellungsverfahren des Bauteils sowie ein Verbindungsverfahren zur Herstellung des Bauteilverbunds.

### 2. Hintergrund der Erfindung

Bei der Verbindung von zwei Bauteilen mittels einer Schraube wird einerseits viel Wert auf eine Schraubensicherung gegen selbsttätiges Lösen und andererseits auf eine verlässliche Verbindung zwischen Bauteil und Schraube gelegt, so dass eine hohe Auszugsfestigkeit vorhanden ist. Daher ist es bekannt, insbesondere ein Bauteil aus einem Kunststoff mit einem Drahtgewindeeinsatz zu versehen. Üblicherweise wird hierbei der Drahtgewindeeinsatz nach der Herstellung des Bauteils in eine mit einem Innengewinde versehene Bauteilöffnung eingebracht.

Ausgestaltungen von Drahtgewindeeinsätzen zur Schraubensicherung sind dem Fachmann in einer Vielzahl bekannt, beispielsweise aus EP 2 405 150 A1, DE 1 085 381 B, GB 857,058 A, US 3,031,004 A, US 3,459,248 A und US 2022/275823 A.

Neben dem Einbringen des Drahtgewindeeinsatzes in das Bauteil nach dessen Herstellung ist aus DE 10 2018 100 684 A1 ein Vorgehen zur Herstellung eines Bauteils aus einem thermoplastischen Kunststoff mit einer Dauergebrauchstemperatur von mindestens 130 °C mit eingeformtem Drahtgewindeeinsatz bekannt. Der Drahtgewindeeinsatz umfasst ein erstes axiales Ende mit einem ersten Innendurchmesser und ein zweites axiales Ende mit einem zweiten Innendurchmesser, ist in axialer Richtung vollständig in das Bauteil eingeformt und umfasst zwischen dem ersten und dem zweiten axialen Ende mindestens eine verengte Windung mit einem im Vergleich zum ersten und zweiten Innendurchmesser verringerten dritten Innendurchmesser, die radial nach außen bis zu einer Bauteilinnenwand bewegbar ist.

Als Alternative zum Einformen ist es weiterhin bekannt, einen Gewindeeinsatz in einem 3D-Druck-Bauteil oder einem additiv gefertigten Bauteil anzuordnen. So ist aus EP 3 915 763 A1 ein 3D-Druck-Bauteil aus Kunststoff oder Metall bekannt, welches mit Hilfe eines bekannten 3D-Druck-Verfahrens hergestellt ist. Das Bauteil umfasst einen Bauteilkörper mit einem Aufnahmeraum, der durch eine umgebende Begrenzungswand eingeschlossen ist und in welchem eine Verbindungskomponente fest angeordnet ist. Die Verbindungskomponente ist durch mindestens eine Öffnung der Begrenzungswand mit einem Verbindungselement außerhalb des 3D-Druck-Bauteils verbindbar. Der Aufnahmeraum weist eine 3D-gedruckte Innenkontur auf, die nicht rotationssymmetrisch zumindest teilweise angepasst an eine angrenzende Seite der Verbindungskomponente ausgebildet ist, so dass die Verbindungskomponente formschlüssig im Aufnahmeraum gehalten ist. Die Begrenzungswand des Aufnahmeraums besteht zumindest an einer Seite aus einem separaten Wandelement, welches den Aufnahmeraum direkt begrenzt, mittels 3D-Druck überdruckt und in die Begrenzungswand integriert ist.

Ein Befestigungselement mit einem beweglichen Gewindeelement, das in einem in einem Körper gebildeten Hohlraum aufgehängt ist, ist in US 2020/0215627 A1 beschrieben. Das bewegliche Gewindeelement hat eine Innenfläche mit einem Gewinde zum Zusammenwirken mit einem Gewindebefestigungselement. Das bewegliche Gewindeelement wird durch das eine oder die mehreren federähnlichen Elemente im Hohlraum aufgehängt, so dass im Hohlraum in der Nähe des beweglichen Gewindeelements ein Bereich mit verringerter Steifigkeit entsteht, wodurch sich das bewegliche Gewindeelement innerhalb des Hohlraums um eine vorgegebene Distanz bewegen kann, wenn ein Drehmoment auf das Gewindebefestigungselement ausgeübt wird. Das eine oder die mehreren federartigen Elemente speichern potentielle Energie in elastischer Weise, um den Verlust der Vorspannung des Gewindebefestigungselements zu verhindern, der durch Hitze oder Vibration verursacht werden kann.

Schließlich offenbart auch WO 2012/166552 A1 ein Befestigungselement. In einem Aspekt besteht das Befestigungselement aus Materialschichten, einem lichthärtbaren Material und/oder mehreren zusammengesetzten Materialien. Ein anderer Aspekt verwendet eine dreidimensionale Druckmaschine, um Material aus einem Tintenstrahldruckkopf auszustoßen, um das Befestigungselement aufzubauen. In einer Ausgestaltung ist im Inneren des Befestigungselement ein Gewindeeinsatz angeordnet.

Ein Nachteil dieser Vorgehensweisen ist, dass die Herstellung komplex und zeitaufwändig ist, da eine Vielzahl an Schritten erforderlich ist. Dies gilt gerade unter Berücksichtigung des Punkts, dass eine Schraubensicherungsfunktion im Bauteil bereitgestellt werden soll, was durch einen eigenständigen Gewindeeinsatz erfolgt. Um den Gewindeeinsatz in das Bauteil einzubringen ist daher häufig ein Nacharbeiten am Bauteil erforderlich, was entsprechende Werkzeuge nötig macht und zu Verunreinigungen der Öffnung oder des Lochs im Bauteil führt.

Schließlich offenbart US 2014/286727 A1 eine einteilige, selbstsichernde Mutter. Die Mutter besteht aus einem Gewindemutterkörper, der an einer vorderen Kontaktfläche des Mutterkörpers mit integral ausgebildeten Quetschverriegelungslippen versehen ist, die durch einen inneren Entlastungsschnitt beabstandet sind, um eine Verformung der Quetschverriegelungslippen darin zu ermöglichen. Wenn die Mutter auf einem Gegenstand auf einem Befestigungsbolzen festgezogen wird, werden die Quetschverriegelungslippen nach innen gedrückt und auf dem Gewindeschaft des Befestigungsbolzens in den Raum des inneren Entlastungsschnitts verformt, um eine dauerhafte Verriegelung auf dem Befestigungsbolzen zu bilden. Die einteilige, selbstsichernde Mutter kann mit herkömmlichen Mutternherstellungsverfahren hergestellt werden. Im Gebrauch lässt sie sich wie eine herkömmliche Mutter schnell aufschrauben und mit herkömmlichen Werkzeugen installieren. Schließlich offenbart auch TW I 673439 B eine selbstsichernde Schraube.

Die Aufgabe der vorliegenden Erfindung ist daher, ein Bauteil mit Schraubensicherungsfunktion bereitzustellen, das im Vergleich zum Stand der Technik optimiert ist. Ebenso ist es eine Aufgabe der vorliegenden Erfindung, einen entsprechenden Bauteilverbund, ein Herstellungsverfahren des Bauteils sowie ein Verbindungsverfahren zur Herstellung des Bauteilverbunds anzugeben.

### 3. Zusammenfassung der Erfindung

Die obige Aufgabe wird gelöst durch ein additiv hergestelltes Bauteil mit einem Loch gemäß dem unabhängigen Patentanspruch 1, ein additiv hergestelltes Bauteil mit einem Vorsprung gemäß dem unabhängigen Patentanspruch 9, einen Bauteilverbund mit dem additiv hergestellten Bauteil mit Loch gemäß dem abhängigen Patentanspruch 14, einen Bauteilverbund mit dem additiv hergestellten Bauteil mit Vorsprung gemäß dem abhängigen Patentanspruch 15, ein Herstellungsverfahren für das additiv hergestellte Bauteil gemäß dem unabhängigen Patentanspruch 16 und ein Verbindungsverfahren eines ersten Bauteils mit einem zweiten Bauteil zur Herstellung des Bauteilverbunds gemäß dem unabhängigen Patentanspruch 17. Vorteilhafte Ausführungsformen und Weiterentwicklungen ergeben sich aus der nachfolgenden Beschreibung, den Zeichnungen sowie den anhängigen Patentansprüchen.

In einer ersten erfindungsgemäßen Alternative eines additiv hergestellten Bauteils weist das additiv hergestellte Bauteil ein Loch auf, das eine Innenwand in einem Bauteilkörper des additiv hergestellten Bauteils bereitstellt, wobei die Innenwand umfasst: einen Befestigungsbereich mit einem Innengewinde, der eine zentrale Längsachse des Lochs definiert, und einen Sicherungsbereich zum kraftschlüssigen Sichern einer Befestigungsschraube in dem Loch, insbesondere durch Klemmen, so dass der Sicherungsbereich eine Schraubensicherungsfunktion bereitstellt, wobei der Sicherungsbereich radial nach außen versetzbar ist, axial versetzbar ist oder bezogen auf die zentrale Längsachse krummlinig verläuft.

Nachfolgend wird die erste Alternative des erfindungsgemäßen additiv hergestellten Bauteils mit Loch im Rahmen der Verwendung des Bauteils in einem Bauteilverbund verdeutlicht. Der beispielhafte Bauteilverbund besteht, neben dem additiv hergestellten Bauteil als erstem Bauteil, aus einem zweiten Bauteil mit einem Durchgangsloch sowie einer Befestigungsschraube. Das Gewinde im Befestigungsbereichs des Lochs kann ein metrisches oder zölliges Gewinde sein.

Zur Herstellung des Bauteilverbunds wird das Durchgangsloch des zweiten Bauteils in Übereinstimmung mit dem Loch im ersten Bauteil, d.h. im additiv hergestellten Bauteil, angeordnet. Anschließend wird die Befestigungsschraube durch das Durchgangsloch im zweiten Bauteil gesteckt, bis sie mit dem zylindrischen Befestigungsbereich des additiv hergestellten Bauteils in Eingriff gelangt. In das dort vorhandene Innengewinde wird die Befestigungsschraube in bekannter Weise eingeschraubt. Das Loch kann somit ein Durchgangsloch oder ein Sackloch sein. Als Material für das additiv hergestellte Bauteil kommen sowohl Metall wie auch Kunststoff in Frage, wobei insbesondere aufgrund des Sicherungsbereichs, der die Schraubensicherungsfunktion zum kraftschlüssigen Sichern der Befestigungsschraube in dem Loch des additiv hergestellten Bauteils bereitstellt, die Verwendung von Metall bevorzugt ist.

Zur Verdeutlichung der Sicherungsfunktion wird zunächst auf die erste Variante, d.h. den radial nach außen versetzbaren Sicherungsbereich eingegangen.

Während das Loch im Befestigungsbereich einen Innendurchmesser aufweist, der zum Außendurchmesser der verwendeten Befestigungsschraube passt, weist der Sicherungsbereich eine Innenabmessung auf, die im Vergleich zu dem Außendurchmesser der Befestigungsschraube zumindest abschnittsweise verringert oder kleiner ist. Beispielhaft ist ein Innendurchmesser im Sicherungsbereich kleiner als der Innendurchmesser im Befestigungsbereich, auch wenn dies nicht zwingend erforderlich ist, was anhand der detaillierten Beschreibung der bevorzugten Ausführungsformen deutlich wird.

Im Sicherungsbereich ist das additiv hergestellte Bauteil so ausgestaltet, dass der Sicherungsbereich radial nach außen nachgeben kann. In diesem Bereich des Bauteilkörpers ist also kein Vollmaterial vorhanden.

Aufgrund dieser Kombination aus radial nach außen versetzbarer Innenwand des Lochs und der im Vergleich zum Außendurchmesser der Befestigungsschraube zumindest abschnittsweise verringerten Innenabmessung im radial nach außen versetzbaren Sicherungsbereich, ist die zum Einschrauben der Befestigungsschraube erforderliche Kraft erhöht, während gleichzeitig keine Blockade beim Einschrauben der Befestigungsschraube auftritt. Vielmehr wird hierdurch eine so hohe Klemmwirkung erzeugt, dass die Befestigungsschraube gegen ein unbeabsichtigtes Lösen gesichert ist.

Ein Vorteil dieser Ausgestaltung ist, dass ein so ausgestaltetes additiv hergestelltes Bauteil neben der Schraubensicherungsfunktion ebenfalls eine Dichtfunktion erfüllt.

Dieser Effekt kann dadurch variiert werden, dass der Sicherungsbereich quer zur zentralen Längsachse eine nicht runde Form aufweist, wie beispielsweise eine polygonale oder ovale Form.

Eine weitere Variation kann durch das Einbringen von einem oder mehreren in axialer Richtung verlaufenden Schlitzen in die Innenwand des Lochs erfolgen. Dieser bzw. diese wirken sich einerseits vorteilhaft auf das Einschraubverhalten der Befestigungsschraube aus und ermöglichen andererseits eine weitere Einstellung der Klemmkraft, wenn der Schlitz oder die Schlitze im Sicherungsbereich vorgesehen ist/sind. Allerdings geht hierbei die Dichtfunktion verloren. Alternativ können der oder die Schlitze auch nur im Befestigungsbereich oder im Befestigungsbereich und im Sicherungsbereich vorgesehen sein.

Die zweite Variante des Sicherungsbereichs, d.h. der axial versetzbare Sicherungsbereich, wird in Verbindung mit einer Gewindeteilung verwendet. Dies bedeutet, dass im Sicherungsbereich zwingend ein Innengewinde vorhanden ist. Allerdings ist das Innengewinde im Sicherungsbereich zum Innengewinde im Befestigungsbereich versetzt angeordnet. Um das kraftschlüssige Sichern der Befestigungsschraube im additiv hergestellten Bauteil zu realisieren, sind der Befestigungsbereich und der Sicherungsbereich in axialer Richtung voneinander beabstandet, beispielsweise über eine erste Aussparung. Diese stellt eine Bewegbarkeit des Sicherungsbereichs in Richtung des Befestigungsbereichs beim Festschrauben der Befestigungsschraube sicher.

Aufgrund dieser Kombination aus axial versetzbarem Sicherungsbereich und dem Gewindeversatz zwischen Innengewinde im Befestigungsbereich und Innengewinde im Sicherungsbereich, ist die zum Einschrauben der Befestigungsschraube erforderliche Kraft erhöht, während gleichzeitig keine Blockade beim Einschrauben der Befestigungsschraube auftritt. Vielmehr wird auch hierdurch eine so hohe Klemmwirkung erzeugt, dass die Befestigungsschraube gegen ein unbeabsichtigtes Lösen gesichert ist.

Während in der gerade beschriebenen Ausführungsform der axial versetzbare Sicherungsbereich zwingend in Einschraubrichtung der Befestigungsschraube hinter dem Befestigungsbereich vorhanden ist, ist der Sicherungsbereich in einer anderen Ausführungsform des axial versetzbaren Sicherungsbereichs in Einschraubrichtung der Befestigungsschraube vor dem Befestigungsbereich vorgesehen. Der Sicherungsbereich wird hierbei durch mehrere Klemmarme gebildet, die durch eine bezogen auf die zentrale Längsachse schräg angeordnete zweite Aussparung gebildet sind. Der Bauteilkörper erstreckt sich im Bereich der Klemmarme in axialer Richtung entgegen der Einschraubrichtung der Befestigungsschraube, so dass diese Bereiche an der Oberfläche des additiv hergestellten Bauteils erhaben ausgebildet sind.

Bei Verwendung passiert die Befestigungsschraube zunächst den Sicherungsbereich und wird anschließend im Befestigungsbereich festgeschraubt. Sobald das zweite Bauteil auf die erhaben ausgebildeten Bereiche an der dem zweiten Bauteil zugewandten Oberfläche des ersten Bauteils drückt, werden die Klemmarme in axialer Richtung versetzt. Aufgrund der schräg angeordneten zweiten Aussparung werden sie zusätzlich radial nach innen versetzt. Durch diese Kombination ist die zum Einschrauben der Befestigungsschraube erforderlich Kraft erhöht, wodurch eine so hohe Klemmwirkung erzeugt wird, dass die Befestigungsschraube gegen ein unbeabsichtigtes Lösen gesichert ist.

Die dritte Variante des Sicherungsbereichs, d.h. der bezogen auf die zentrale Längsachse krummlinig verlaufende Sicherungsbereich, wird durch eine Kurvenform des Lochs im Sicherungsbereich realisiert. Aufgrund dieses krummlinigen Verlaufs des Lochs im Sicherungsbereich, dem die Befestigungsschraube beim Einschrauben folgt, ist die zum Einschrauben der Befestigungsschraube erforderliche Kraft erhöht. Bei diesem Vorgehen wird somit die Elastizität des Materials der Befestigungsschraube genutzt. Dies führt dazu, dass eine so hohe Klemmwirkung erzeugt wird, dass die Befestigungsschraube gegen ein unbeabsichtigtes Lösen gesichert ist.

Ein Vorteil aller drei Varianten der ersten Alternative des erfindungsgemäßen additiv hergestellten Bauteils ist, dass zur Bereitstellung der Sicherungsfunktion keine Nacharbeiten am Bauteil erforderlich sind. Somit sind auch keine durch Nacharbeiten erzeugten Verunreinigungen vorhanden und es sind keine Vorrichtungen zum Durchführen von Nacharbeiten erforderlich. Aufgrund der integralen Ausgestaltung der Sicherungsfunktion entfällt das Einbringen und Befestigen einer entsprechenden Komponente im additiv hergestellten Bauteil. Dies vermeidet zusätzlichen Montageaufwand und vereinfacht die Prozesskontrolle. Weiterhin sind ein besonders kleiner Bauraum sowie ein besonders geringes Gewicht des Bauteils realisierbar.

In einer bevorzugten Ausführungsform des additiv hergestellten Bauteils, bei dem der Sicherungsbereich radial nach außen versetzbar ist, wird der radial nach außen versetzbare Sicherungsbereich durch, ausgehend von der zentralen Längsachse radial nach außen, einen Wandbereich und einen elastischen Bereich gebildet, wobei der Wandbereich eine Dicke von 0,1 mm bis 5 mm aufweist und der elastische Bereich radial vollumfänglich vorhanden ist. Besonders bevorzugt weist der elastische Bereich einen Hohlraum oder eine Gitterstruktur aufweist. Gerade aufgrund der Dicke des Wandbereichs allein oder in Kombination mit dem als Gitterstruktur, vorzugsweise als zweidimensionale Gitterstruktur, ausgebildeten elastischen Bereich lässt sich die später erzeugte Klemmkraft in Verbindung mit der Befestigungsschraube gezielt einstellen. In Abhängigkeit von der Art der additiven Herstellung des Bauteils können eine oder mehrere Öffnungen im Wandbereich vorgesehen sein, damit das im elastischen Bereich vorhandene aber bei der Herstellung des Bauteils nicht verwendete Materialpulver aus dem elastischen Bereich des Bauteils abgeführt werden kann.

Weiterhin ist es vorteilhaft, dass der Wandbereich im Sicherungsbereich ein Innengewinde aufweist. Dies gilt insbesondere dann, wenn die Befestigungsschraube einen Schaft mit nur einem einzigen Durchmesser aufweist. Denn in diesem Fall ist der Sicherungsbereich vorzugsweise in Einschraubrichtung der Befestigungsschraube hinter dem Befestigungsbereich angeordnet. Allerdings ist es nicht zwingend, dass der Sicherungsbereich ein Innengewinde aufweist. Dies ist beispielsweise bei einer Befestigungsschraube mit Suchspitze der Fall. Ein weiteres Beispiel betrifft eine Befestigungsschraube mit einem gewindelosen Schaftbereich benachbart zum Kopf. Beide Beispiele werden später im Rahmen der detaillierten Beschreibung erläutert.

Außerdem ist es insbesondere bei dieser Ausführungsform, bei der der radial nach außen versetzbare Sicherungsbereich durch den Wandbereich und den elastischen Bereich gebildet wird, vorteilhaft, dass im Befestigungsbereich und/oder im Sicherungsbereich mindestens ein sich in axialer Richtung erstreckender Schlitz vorhanden ist. Hierdurch wird das Einschrauben der Befestigungsschraube vorteilhaft unterstützt.

Gemäß einer weiteren bevorzugten Ausführungsform des additiv hergestellten Bauteils, bei dem der Sicherungsbereich axial versetzbar ist, sind der Sicherungsbereich und der Befestigungsbereich durch eine erste Aussparung voneinander beabstandet. In dieser Ausführungsform weisen sowohl der Sicherungsbereich wie auch der Befestigungsbereich ein Innengewinde auf. Die erste Aussparung erstreckt sich vorzugsweise quer zur zentralen Längsachse in den Bauteilkörper und beabstandet den Sicherungsbereich und den Befestigungsbereich in axialer Richtung. Alternativ zu der Erstreckung quer zur zentralen Längsachse ist es bevorzugt, dass die erste Aussparung einen Winkel zwischen 1° und 80° mit der Ebene quer zur zentralen Längsachse einschließt. Zudem ist es bevorzugt, dass die erste Aussparung kegelstumpfartig oder pyramidenstumpfartig ausgebildet ist.

Das Innengewinde im Sicherungsbereich ist dabei vorzugsweise um das 0,01 bis 0,5-fache der Gewindesteigung des Innengewindes im Befestigungsbereich zum Innengewinde im Befestigungsbereich versetzt angeordnet. Besonders bevorzugt ist das Innengewinde im Sicherungsbereich um das 0,05 bis 0,5-fache der Gewindesteigung des Innengewindes im Befestigungsbereich zum Innengewinde im Befestigungsbereich versetzt angeordnet. Weiterhin bevorzugt beträgt der Durchmesser der ersten Aussparung das 1,1 bis 10-fache des Nenndurchmesser des Befestigungsbereichs. Aufgrund dieser Parameter kann die Sicherungsfunktion besonders gezielt eingestellt werden.

Im Rahmen dieser Ausführungsform ist es weiterhin besonders bevorzugt, dass die Aussparung radial vollumfänglich oder teilumfänglich ausgebildet ist. Gerade bei der teilumfänglichen Ausgestaltung ist es bevorzugt, dass sich die erste Aussparung aus einem sich in radialer Richtung und einem sich in axialer Richtung erstreckenden Bereich zusammensetzt. Der sich in axialer Richtung erstreckende Bereich ist dabei bevorzugt von der Innenwand im Sicherungsbereich um das 0,51 bis 1,5-fache des Nenndurchmessers im Befestigungsbereich beabstandet. Auch dies wird später unter Bezugnahme auf die detaillierten Ausführungsformen verdeutlicht.

Weiterhin ist es bei der Variante mit dem axial versetzbaren Sicherungsbereich vorteilhaft, dass der Sicherungsbereich eine Mehrzahl von integral ausgebildeten Klemmarmen benachbart zu einer Oberfläche des Bauteilkörpers des additiv hergestellten Bauteils aufweist. Der Sicherungsbereich ist in diesem Fall in Einschraubrichtung der Befestigungsschraube vor dem Befestigungsbereich angeordnet. Die Klemmarme werden im Sicherungsbereich durch sich radial in den Bauteilkörper erstreckende zweite Aussparungen gebildet. Diese zweiten Aussparungen schließen mit der zentralen Längsachse vorzugsweise einen Winkel zwischen 1° und 45° ein. Die zweite Aussparung ist vorteilhafterweise kegelstumpfartig oder pyramidenstumpfartig ausgebildet. Im Bereich der zweiten Aussparung weist der Bauteilkörper des additiv hergestellten Bauteils an der Bauteiloberfläche, die bei Verwendung dem zweiten Bauteil zugewandt ist, Erhebungen auf. Diese werden bei Verwendung durch das zweite Bauteil in Einschraubrichtung gedrückt. Aufgrund der zweiten Aussparung wird der integral ausgebildete Klemmarm daher zunächst in axialer Richtung versetzt, bis er Kontakt mit dem Bauteilkörper bekommt. Aufgrund der winkligen Ausrichtung der zweiten Aussparung bedingt eine weitere Bewegung entlang der zentralen Längsachse in Einschraubrichtung auch eine radial nach innen gerichtete Bewegung des Klemmarms. Hierdurch wird die Befestigungsschraube daher effektiv gegen ein unbeabsichtigtes Lösen gesichert.

Die Ausgestaltung kann dabei entweder so erfolgen, dass der Klemmarm mit dem Bauteilkörper verbunden bleibt. In diesem Fall liegt keine Selbstsicherung vor und die Klemmkraft wird beim Lösen der Befestigungsschraube wieder abgebaut. Alternativ ist eine Sollbruchstelle vorgesehen, sodass der Klemmarm von dem Bauteilkörper beim Einschrauben der Befestigungsschraube abgetrennt wird.

In einer zweiten erfindungsgemäßen Alternative eines additiv hergestellten Bauteils weist das additiv hergestellte Bauteil einen Vorsprung auf, der eine Außenwand eines Bauteilkörpers des additiv hergestellten Bauteils bereitstellt, wobei die Außenwand umfasst: einen Befestigungsbereich mit einem Außengewinde, der eine zentrale Längsachse des Vorsprungs definiert, und einen Sicherungsbereich zum kraftschlüssigen Sichern einer Mutter an dem Vorsprung, insbesondere durch Klemmen, so dass der Sicherungsbereich eine Sicherungsfunktion bereitstellt, wobei der Sicherungsbereich radial nach innen versetzbar ist, axial versetzbar ist oder bezogen auf die zentrale Längsachse krummlinig verläuft.

Die zweite Alternative unterscheidet sich von der ersten Alternative dadurch, dass anstelle des Lochs ein Vorsprung vorhanden ist. Mit anderen Worten handelt es sich bei der ersten Alternative um ein additiv hergestelltes Bauteil mit weiblichem Verbindungsmerkmal und bei der zweiten Alternative um ein additiv hergestelltes Bauteil mit männlichem Verbindungsmerkmal.

Die Funktionsweise der zweite Alternative des additiv hergestellten Bauteils ist daher analog zu der ersten Alternative.

Zur besseren Nachvollziehbarkeit wird die zweite Alternative des erfindungsgemäßen additiv hergestellten Bauteils mit Vorsprung ebenfalls im Rahmen der Verwendung des Bauteils in einem Bauteilverbund verdeutlicht. Der beispielhafte Bauteilverbund besteht, neben dem additiv hergestellten Bauteil als erstem Bauteil, aus einem zweiten Bauteil mit einem Durchgangsloch sowie einer Mutter.

Zur Herstellung des Bauteilverbunds wird das Durchgangsloch des zweiten Bauteils in Übereinstimmung mit dem Vorsprung des ersten Bauteils, d.h. dem additiv hergestellten Bauteil, angeordnet. Anschließend wird die Mutter mit dem auf dem Vorsprung vorgesehenen Außengewinde in Eingriff gebracht und festgeschraubt. Als Material für das additiv hergestellte Bauteil kommen auch hier sowohl Metall wie auch Kunststoff in Frage, wobei insbesondere aufgrund des Sicherungsbereichs, der die Sicherungsfunktion zum kraftschlüssigen Sichern der Mutter auf dem Vorsprung des additiv hergestellten Bauteils bereitstellt, die Verwendung von Metall bevorzugt ist.

Zur Verdeutlichung der Sicherungsfunktion wird zunächst auf die erste Variante, d.h. den radial nach innen versetzbaren Sicherungsbereich eingegangen.

Während der Vorsprung im Befestigungsbereich zylindrisch ausgebildet ist und einen Außendurchmesser aufweist, der zum Innendurchmesser der verwendeten Mutter passt, weist der Sicherungsbereich einen Außendurchmesser auf, der im Vergleich zu dem Innendurchmesser der Mutter vergrößert ist. Beispielhaft ist der Durchmesser im Sicherungsbereich größer als der Durchmesser im Befestigungsbereich.

Wie für die erste Alternative wird auch in der zweiten Alternative das additiv hergestellte Bauteil im Sicherungsbereich so ausgestaltet, dass der Sicherungsbereich radial nachgeben kann. In der zweiten Alternative erfolgt das radiale Nachgeben bezogen auf die zentrale Längsachse jedoch nach innen und nicht nach außen. In diesem Bereich ist also kein Vollmaterial vorhanden.

Aufgrund dieser Kombination aus radial nach innen versetzbarer Außenwand des Vorsprungs und dem im Vergleich zum Innendurchmesser der Mutter vergrößertem Außendurchmesser im radial nach innen versetzbaren Sicherungsbereich, ist die zum Festschrauben der Mutter erforderliche Kraft erhöht, während gleichzeitig keine Blockade beim Festschrauben der Mutter auftritt. Vielmehr wird hierdurch eine so hohe Klemmwirkung erzeugt, dass die Mutter gegen ein unbeabsichtigtes Lösen gesichert ist.

Ein Vorteil dieser Ausgestaltung ist, dass ein so ausgestaltetes additiv hergestelltes Bauteil neben der Schraubensicherungsfunktion ebenfalls eine Dichtfunktion erfüllt.

Dieser Effekt kann dadurch variiert werden, dass der Sicherungsbereich quer zur zentralen Längsachse eine nicht runde Form aufweist, wie beispielsweise eine polygonale oder ovale Form.

Die zweite Variante des Sicherungsbereichs, d.h. der axial versetzbare Sicherungsbereich, wird in Verbindung mit einer Gewindeteilung verwendet. Dies bedeutet, dass im Sicherungsbereich zwingend ein Außengewinde vorhanden ist. Allerdings ist das Außengewinde im Sicherungsbereich zum Außengewinde im Befestigungsbereich versetzt angeordnet.

Um das kraftschlüssige Sichern der Mutter im additiv hergestellten Bauteil der zweiten Alternative zu realisieren, sind der Befestigungsbereich und der Sicherungsbereich in axialer Richtung voneinander beabstandet, beispielsweise über eine erste Aussparung. Diese stellt eine Bewegbarkeit des Sicherungsbereichs in Richtung des Befestigungsbereichs beim Festschrauben der Befestigungsschraube sicher.

Aufgrund dieser Kombination aus axial versetzbarem Sicherungsbereich und dem Gewindeversatz zwischen Außengewinde im Befestigungsbereich und Außengewinde im Sicherungsbereich, ist die zum Festschrauben der Mutter erforderliche Kraft erhöht, wodurch eine so hohe Klemmwirkung erzeugt wird, dass die Mutter gegen ein unbeabsichtigtes Lösen gesichert ist.

Die dritte Variante des Sicherungsbereichs, d.h. der bezogen auf die zentrale Längsachse krummlinig verlaufende Sicherungsbereich, wird durch eine Kurvenform des Vorsprungs im Sicherungsbereich realisiert. Aufgrund dieses krummlinigen Verlaufs des Vorsprungs, dem die Mutter beim Festschrauben folgt, ist die zum Festschrauben der Mutter erforderliche Kraft erhöht. Dies führt dazu, dass eine so hohe Klemmwirkung erzeugt wird, dass die Mutter gegen ein unbeabsichtigtes Lösen gesichert ist.

Die Vorteile der Varianten der zweiten Alternative des erfindungsgemäßen additiv hergestellten Bauteils entsprechen den Vorteilen der ersten Alternative des erfindungsgemäßen additiv hergestellten Bauteils. Daher wird zur Vermeidung von Wiederholungen auf die obigen Ausführungen verwiesen.

In einer bevorzugten Ausführungsform des additiv hergestellten Bauteils, bei dem der Sicherungsbereich radial nach innen versetzbar ist, wird der radial versetzbare Sicherungsbereich gebildet durch, ausgehend von der radialen Außenseite radial nach innen, einen Wandbereich und einen elastischen Bereich, wobei der Wandbereich eine Dicke von 0,1 mm bis 5 mm aufweist und der elastische Bereich radial vollumfänglich vorhanden ist. In diesem Zusammenhang ist es vorteilhaft, dass der elastische Bereich einen Hohlraum oder eine Gitterstruktur aufweist. Ebenso ist es bevorzugt, dass der Wandbereich im Sicherungsbereich ein Außengewinde aufweist. Gerade aufgrund der Dicke des Wandbereichs allein oder in Kombination mit dem als Gitterstruktur, vorzugsweise als zweidimensionale Gitterstruktur, ausgebildeten elastischen Bereich lässt sich die später erzeugte Klemmkraft in Verbindung mit der Mutter gezielt einstellen. In Abhängigkeit von der Art der additiven Herstellung des Bauteils können eine oder mehrere Öffnungen im Wandbereich vorgesehen sein, damit das im elastischen Bereich vorhandene aber bei der Herstellung des Bauteils nicht verwendete Materialpulver aus dem elastischen Bereich des Bauteils abgeführt werden kann.

In einer weiteren bevorzugten Ausführungsform des additiv hergestellten Bauteils, bei dem der Sicherungsbereich axial versetzbar ist, sind der Sicherungsbereich und der Befestigungsbereich durch eine erste Aussparung voneinander beabstandet. Hierbei ist es vorteilhaft, dass die erste Aussparung teilumfänglich ausgebildet ist. In dieser Ausführungsform weisen sowohl der Sicherungsbereich wie auch der Befestigungsbereich ein Außengewinde auf. Die erste Aussparung erstreckt sich vorzugsweise quer zur zentralen Längsachse in den Bauteilkörper und beabstandet den Sicherungsbereich und den Befestigungsbereich in axialer Richtung. Alternativ zu der Erstreckung quer zur zentralen Längsachse ist es bevorzugt, dass die erste Aussparung einen Winkel zwischen 1° und 80° mit der zentralen Längsachse einschließt. Zudem ist es bevorzugt, dass die erste Aussparung kegelstumpfartig oder pyramidenstumpfartig ausgebildet ist.

Das Außengewinde im Sicherungsbereich ist dabei vorzugsweise um das 0,01 bis 0,5-fache der Gewindesteigung des Außengewindes im Befestigungsbereich von dem Außengewinde im Befestigungsbereich beabstandet. Besonders bevorzugt ist das Außengewinde im Sicherungsbereich um das 0,05 bis 0,5-fache der Gewindesteigung des Außengewindes im Befestigungsbereich von dem Außengewinde im Befestigungsbereich beabstandet.

Gemäß einer ersten Alternative besteht ein erfindungsgemäßer Bauteilverbund aus einem ersten Bauteil, einem zweiten Bauteil mit einem Durchgangsloch sowie einer Befestigungsschraube, wobei das erste Bauteil ein additiv hergestelltes Bauteil mit Loch gemäß der ersten Alternative vorliegenden Erfindung ist und das zweite Bauteil an dem ersten Bauteil mittels der Befestigungsschraube befestigt ist. Die erste Alternative des erfindungsgemäßen Bauteilverbund weist somit die erste Alternative des erfindungsgemäßen additiv hergestellten Bauteils auf. Um Wiederholungen zu vermeiden, wird daher bezüglich der sich ergebenden technischen Effekte und Vorteile auf die obigen Ausführungen zur ersten Alternative des erfindungsgemäßen additiv hergestellten Bauteils verwiesen.

Gemäß einer zweiten Alternative besteht ein erfindungsgemäßer Bauteilverbund aus einem ersten Bauteil, einem zweiten Bauteil mit einem Durchgangsloch sowie einer Mutter, wobei das erste Bauteil ein additiv hergestelltes Bauteil mit Vorsprung gemäß der vorliegenden Erfindung ist und das zweite Bauteil an dem ersten Bauteil mittels einer Mutter befestigt ist. Die zweite Alternative des erfindungsgemäßen Bauteilverbunds weist somit die zweite Alternative des erfindungsgemäßen additiv hergestellten Bauteils auf. Zur Vermeidung von Wiederholungen wird daher bezüglich der sich ergebenden technischen Effekte und Vorteile auf die obigen Ausführungen zur zweiten Alternative des erfindungsgemäßen additiv hergestellten Bauteils verwiesen.

Ein erfindungsgemäßes Herstellungsverfahren für ein erfindungsgemäßes additiv hergestelltes Bauteil umfasst die folgenden Schritte: Bereitstellen einer dreidimensionalen Zeichnung des Bauteils, Umwandeln der dreidimensionalen Zeichnung in ein maschinenlesbares Schichtmodel und additives Fertigen des Bauteils, vorzugsweise aus Metall. Mit dem erfindungsgemäßen Herstellungsverfahren ist das erfindungsgemäße Bauteil gemäß der ersten und gemäß der zweiten Alternative mittels additiver Fertigung herstellbar. Bezüglich der sich ergebenden technischen Effekte und Vorteile wird aus diesem Grund auf die entsprechenden obigen Ausführungen verwiesen.

Ein erfindungsgemäßes Verbindungsverfahren eines ersten Bauteils mit einem zweiten Bauteil zur Herstellung eines erfindungsgemäßen Bauteilverbunds umfasst die Schritte: Bereitstellen eines ersten Bauteils und eines zweiten Bauteils mit einem Durchgangsloch, wobei das erste Bauteil ein additiv hergestelltes Bauteil gemäß der ersten erfindungsgemäßen Alternative oder gemäß der zweiten erfindungsgemäßen Alternative ist, und, wenn das erste Bauteil ein additiv hergestelltes Bauteil gemäß der ersten erfindungsgemäßen Alternative ist, dann Anordnen des Durchgangslochs des zweiten Bauteils in Übereinstimmung mit dem im ersten Bauteil vorhanden Loch und Befestigen des ersten und des zweiten Bauteils aneinander mittels einer Befestigungsschraube, oder, wenn das erste Bauteil ein additiv hergestelltes Bauteil gemäß der zweiten erfindungsgemäßen Alternative ist, dann Anordnen des Durchgangslochs des zweiten Bauteils in Übereinstimmung mit dem Vorsprung des ersten Bauteils und Befestigen des ersten und des zweiten Bauteils aneinander mittels einer Mutter. Aufgrund des erfindungsgemäßen Verbindungsverfahrens ist der erfindungsgemäße Bauteilverbund gemäß der ersten und gemäß der zweiten Alternative herstellbar. Zur Vermeidung von Wiederholungen wird daher bezüglich der sich ergebenden technischen Effekte und Vorteile ebenfalls auf die entsprechenden obigen Ausführungen verwiesen.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine Schnittansicht einer Ausführungsform eines Bauteilverbunds mit einer ersten Ausführungsform eines additiv hergestellten Bauteils mit Loch gemäß der vorliegenden Erfindung entlang der Längsachse,
- Figur 2: eine Schnittansicht einer zweiten Ausführungsform eines additiv hergestellten Bauteils mit Loch gemäß der vorliegenden Erfindung mit einem darüber angeordneten Bauteil entlang der Längsachse,
- Figur 3: eine Schnittansicht einer dritten Ausführungsform eines additiv hergestellten Bauteils mit Loch gemäß der vorliegenden Erfindung mit einem darüber angeordneten Bauteil entlang der Längsachse,
- Figur 4: eine Schnittansicht einer vierten Ausführungsform eines additiv hergestellten Bauteils mit Loch gemäß der vorliegenden Erfindung mit einem darüber angeordneten Bauteil entlang der Längsachse,
- Figur 5: eine erste Schnittansicht einer fünften Ausführungsform eines additiv hergestellten Bauteils mit Loch gemäß der vorliegenden Erfindung quer zur Längsachse,
- Figur 6: eine zweite Schnittansicht der fünften Ausführungsform eines additiv hergestellten Bauteils mit Loch gemäß der vorliegenden Erfindung quer zur Längsachse,
- Figur 7: eine Schnittansicht einer sechsten Ausführungsform eines additiv hergestellten Bauteils mit Loch gemäß der vorliegenden Erfindung mit einem darüber angeordneten Bauteil entlang der Längsachse,
- Figur 8: eine Schnittansicht einer siebten Ausführungsform eines additiv hergestellten Bauteils mit Loch gemäß der vorliegenden Erfindung mit einem darüber angeordneten Bauteil entlang der Längsachse,
- Figur 9: eine Schnittansicht einer achten Ausführungsform eines additiv hergestellten Bauteils mit Loch gemäß der vorliegenden Erfindung mit einem darüber angeordneten Bauteil entlang der Längsachse,
- Figur 10: eine Schnittansicht einer neunten Ausführungsform eines additiv hergestellten Bauteils mit Loch gemäß der vorliegenden Erfindung mit einem darüber angeordneten Bauteil entlang der Längsachse,
- Figur 11: eine Schnittansicht einer Ausführungsform eines Bauteilverbunds mit einer ersten Ausführungsform eines additiv hergestellten Bauteils mit Vorsprung gemäß der vorliegenden Erfindung entlang der Längsachse,
- Figur 12: eine Schnittansicht einer Ausführungsform eines Bauteilverbunds mit einer zweiten Ausführungsform eines additiv hergestellten Bauteils mit Vorsprung gemäß der vorliegenden Erfindung entlang der Längsachse,
- Figur 13: eine Schnittansicht einer Ausführungsform eines Bauteilverbunds mit einer dritten Ausführungsform eines additiv hergestellten Bauteils mit Vorsprung gemäß der vorliegenden Erfindung entlang der Längsachse,
- Figur 14: ein Flussdiagramm einer Ausführungsform eines erfindungsgemäßen Herstellungsverfahrens eines Bauteils und
- Figur 15: ein Flussdiagramm einer Ausführungsform eines Verbindungsverfahrens zur Herstellung eines Bauteilverbunds.

### 5. Detaillierte Beschreibung der bevorzugten Ausführungsformen

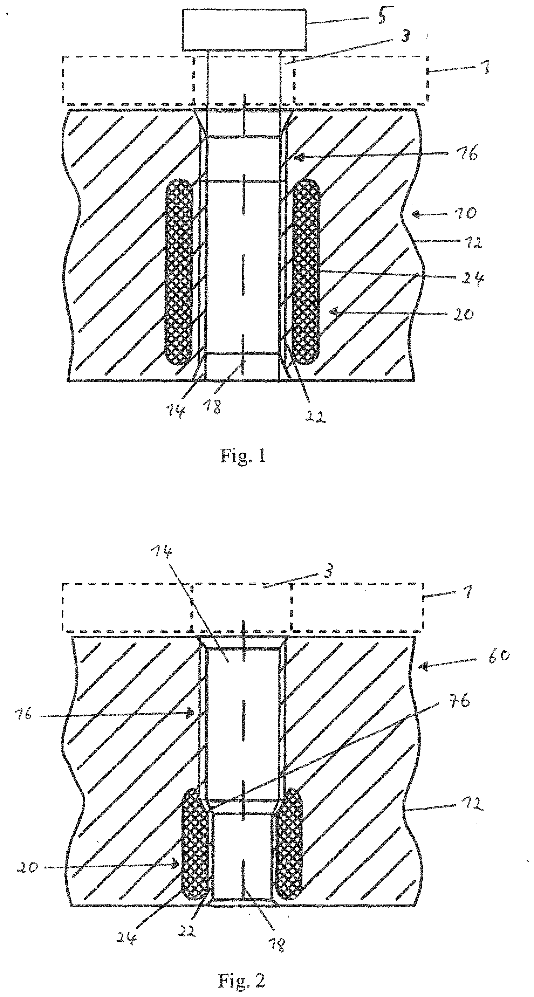

Unter Bezugnahme auf Figur 1 wird eine Ausführungsform eines Bauteilverbunds mit einer ersten Ausführungsform eines additiv hergestellten Bauteils 10 mit Loch 14 gemäß der vorliegenden Erfindung erläutert. Als Material für das additiv hergestellte Bauteil 10 kommen sowohl Metall wie auch Kunststoff in Frage. Aufgrund der durch das additiv hergestellte Bauteil 10 bereitgestellten Schraubensicherungsfunktion zum kraftschlüssigen Sichern einer Befestigungsschraube 5 in dem Loch 14 ist die Verwendung von Metall bevorzugt.

Der Bauteilverbund besteht aus dem additiv hergestellten Bauteil 10 als erstem Bauteil, aus einem zweiten Bauteil 1 mit einem Durchgangsloch 3 sowie einer Befestigungsschraube 5.

Wie eingangs erwähnt weist das additiv hergestellte Bauteil 10 das Loch 14 auf. Das Loch 14 kann ein Durchgangsloch oder ein Sackloch sein. In der dargestellten Ausführungsform handelt es sich bei dem Loch 14 um ein Durchgangsloch. Dieses stellt eine Innenwand in einem Bauteilkörper 12 des additiv hergestellten Bauteils 10 bereit. Die Innenwand umfasst einen Befestigungsbereich 16 mit einem Innengewinde und einen Sicherungsbereich 20 zum kraftschlüssigen Sichern der Befestigungsschraube 5 in dem Loch 14.

Der Befestigungsbereich 16 definiert eine zentrale Längsachse 18 des Lochs 14. Das Innengewinde im Befestigungsbereich 16 des Lochs 14 kann ein metrisches oder zölliges Gewinde sein, in Abhängigkeit von der gewünschten Anwendung. Um einen sicheren Eingriff zwischen Innengewinde im Befestigungsbereich 16 und Außengewinde der Befestigungsschraube 5 sicherzustellen, weist das Loch 14 im Befestigungsbereich 16 einen Innendurchmesser auf, der zum Außendurchmesser der verwendeten Befestigungsschraube 5 passt.

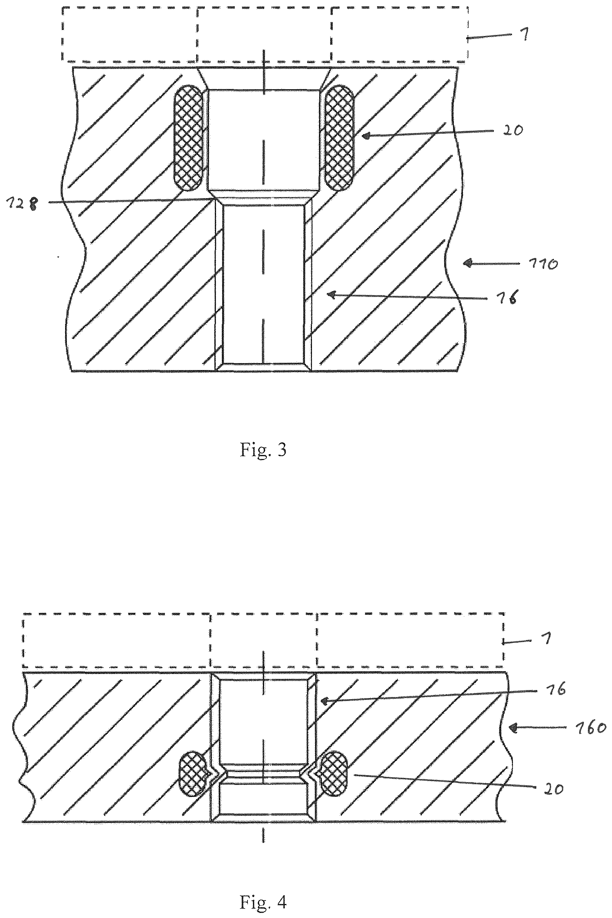

Das kraftschlüssige Sichern der Befestigungsschraube 5 im Sicherungsbereich 20 ermöglicht, dass der Sicherungsbereich 20 eine Schraubensicherungsfunktion bereitstellt. Dies erfolgt vorzugsweise durch Klemmen. Dazu weist der Sicherungsbereich 20 eine Innenabmessung auf, die im Vergleich zu dem Außendurchmesser der Befestigungsschraube 5 zumindest abschnittsweise verringert oder kleiner ist. In der vorliegenden Ausführungsform gemäß Figur 1 ist der Innendurchmesser im Sicherungsbereich 20 dazu kleiner als der Innendurchmesser im Befestigungsbereich 16. Dies ist jedoch nicht zwingend erforderlich, was später anhand der Ausführungsform gemäß Figur 3 erläutert wird.

Weiterhin weist der Sicherungsbereich 20 ein Innengewinde auf. Dies ist insbesondere dann vorteilhaft, wenn die Befestigungsschraube 5 einen Schaft mit nur einem einzigen Durchmesser aufweist. Zudem ist in diesem Fall, wie in Figur 1 dargestellt, der Sicherungsbereich 20 vorzugsweise in Einschraubrichtung der Befestigungsschraube 5 hinter dem Befestigungsbereich 16 angeordnet. Allerdings ist es nicht zwingend, dass der Sicherungsbereich 20 ein Innengewinde aufweist, was später anhand der Ausführungsformen gemäß den Figuren 2 und 3 erläutert wird.

In der vorliegenden Ausführungsform gemäß Figur 1, wie auch in den Ausführungsformen gemäß den Figuren 2 bis 6, ist der Sicherungsbereich 20 radial nach außen versetzbar. Dies bedeutet, dass das additiv hergestellte Bauteil 10 im Sicherungsbereich 20 so ausgestaltet ist, dass der Sicherungsbereich 20 radial nach außen bezogen auf die zentrale Längsachse 18 nachgeben kann. In diesem Bereich des Bauteilkörpers 12 ist also kein Vollmaterial vorhanden.

Der radial nach außen versetzbare Sicherungsbereich 20 wird gebildet durch, ausgehend von der zentralen Längsachse 18 radial nach außen, einen Wandbereich 22 und einen elastischen Bereich 24. Der Wandbereich 22 weist eine Dicke von 0,1 mm bis 5 mm auf. Die Wahl der Wanddicke hängt vom verwendeten Material, der Ausgestaltung des elastischen Bereichs 24 und der gewünschten Kraft zur Realisierung der Sicherungsfunktion ab.

Der elastische Bereich 24 ist radial vollumfänglich vorhanden. Der elastische Bereich 24 kann beispielsweise ein Hohlraum sein, so dass der Wandbereich 22 radial nach außen ausweichen kann, wenn die Befestigungsschraube 5 in den Sicherungsbereich 20 eingeführt wird. Alternativ, wie in Figur 1 dargestellt, weist der elastische Bereich 24 eine Gitterstruktur, insbesondere eine zweidimensionale Gitterstruktur, auf. Sowohl bei einem Hohlraum als auch bei einer Gitterstruktur im elastischen Bereich 24 ist es bevorzugt, dass im Wandbereich 22 mindestens eine Öffnung vorhanden ist, damit das im elastischen Bereich 24 vorhandene aber bei der Herstellung des Bauteils 10 nicht verwendete Materialpulver aus dem elastischen Bereich 24 des Bauteils 10 abgeführt werden kann.

Aufgrund dieser Kombination aus radial nach außen versetzbarer Innenwand des Lochs 14 und der im Vergleich zum Außendurchmesser der Befestigungsschraube 5 zumindest abschnittsweise verringerten Innenabmessung im radial nach außen versetzbaren Sicherungsbereich 20, ist die zum Einschrauben der Befestigungsschraube 5 erforderliche Kraft erhöht, während gleichzeitig keine Blockade beim Einschrauben der Befestigungsschraube 5 auftritt. Vielmehr wird hierdurch eine so hohe Klemmwirkung erzeugt, dass die Befestigungsschraube 5 gegen ein unbeabsichtigtes Lösen gesichert ist.

Zur Herstellung des Bauteilverbunds wird das Durchgangsloch 3 des zweiten Bauteils 1 in Übereinstimmung mit dem Loch 14 im ersten Bauteil, d.h. im additiv hergestellten Bauteil 10, angeordnet. Anschließend wird die Befestigungsschraube 5 durch das Durchgangsloch 3 im zweiten Bauteil 1 gesteckt, bis sie mit dem zylindrischen Befestigungsbereich 16 des additiv hergestellten Bauteils 10 in Eingriff gelangt. In das dort vorhandene Innengewinde wird die Befestigungsschraube 5 in bekannter Weise eingeschraubt. Gegen Ende des Einschraubvorgangs gelangt die Befestigungsschraube 5 mit dem Sicherungsbereich 20 in Eingriff, wodurch die zum Einschrauben erforderliche Kraft erhöht ist. Am Ende des Einschraubvorgangs ist die Befestigungsschraube 5 kraftschlüssig im Sicherungsbereich 20 gegen ein unbeabsichtigtes Lösen gesichert.

Ein Vorteil dieser Ausgestaltung ist, dass ein so ausgestaltetes additiv hergestelltes Bauteil 10 neben der Schraubensicherungsfunktion ebenfalls eine Dichtfunktion erfüllt. Zudem sind aufgrund der additiven Herstellung des Bauteils 10 zur Bereitstellung der Sicherungsfunktion keine Nacharbeiten am Bauteil 10 erforderlich. Somit sind auch keine durch Nacharbeiten erzeugten Verunreinigungen vorhanden und es sind keine Vorrichtungen zum Durchführen von Nacharbeiten erforderlich. Aufgrund der integralen Ausgestaltung der Sicherungsfunktion entfällt das Einbringen und Befestigen einer entsprechenden Komponente im additiv hergestellten Bauteil 10. Dies vermeidet zusätzlichen Montageaufwand und vereinfacht die Prozesskontrolle. Weiterhin sind ein besonders kleiner Bauraum sowie ein besonders geringes Gewicht des Bauteils realisierbar.

Nun bezugnehmend auf Figur 2 wird eine zweiten Ausführungsform des additiv hergestellten Bauteils 60 mit Loch 14 erläutert. Auch in dieser Ausführungsform verfügt das additiv hergestellte Bauteil 60 über einen radial nach außen versetzbaren Sicherungsbereich 20.

Im Unterschied zur ersten Ausführungsform weist der Sicherungsbereich 20 jedoch kein Innengewinde auf. Vielmehr dient der Sicherungsbereich zum kraftschlüssigen Sichern einer Befestigungsschraube 5 mit Suchspitze. Aus diesem Grund ist zwischen Befestigungsbereich 16 und Sicherungsbereich 20 ein erster konischer Übergang 76 vorhanden. Im Übrigen gelten die Erläuterungen zur ersten Ausführungsform analog auch für die zweite Ausführungsform des additiv hergestellten Bauteils 60.

Figur 3 wiederum zeigt eine dritte Ausführungsform des additiv hergestellten Bauteils 110 mit Loch 14 und radial nach außen versetzbarem Sicherungsbereich 20. Im Unterscheid zu den beiden vorherigen Ausführungsformen ist der Sicherungsbereich 20 in Einschraubrichtung der Befestigungsschraube 5 vor dem Befestigungsbereich 16 angeordnet. Zudem ist der Innendurchmesser im Sicherungsbereich 20 größer als der Innendurchmesser im Befestigungsbereich 16. Aus diesem Grund ist zwischen dem Sicherungsbereich 20 und dem Befestigungsbereich 16 ein zweiter konischer Übergang 128 vorgesehen.

Wie in der zweiten Ausführungsform ist auch in dieser Ausführungsform kein Innengewinde im Sicherungsbereich 20 vorgesehen.

Ein so ausgestaltetes additiv hergestelltes Bauteil 110 ist insbesondere an eine Befestigungsschraube 5 mit einem gewindelosen Schaftbereich benachbart zum Kopf der Befestigungsschraube 5 angepasst.

Nun bezugnehmend auf Figur 4 wird eine vierte Ausführungsform des additiv hergestellten Bauteils 160 mit Loch 14 und radial nach außen versetzbarem Sicherungsbereich 20 vorgestellt. Diese Ausführungsform ist ähnlich zur ersten Ausführungsform. Ein Unterschied zwischen den beiden Ausführungsformen besteht allerdings darin, dass der Sicherungsbereich 20 der ersten Ausführungsform eine deutlich größere Erstreckung in axialer Richtung aufweist im Vergleich zur vierten Ausführungsform. In der vierten Ausführungsform weist der Sicherungsbereich 20 insbesondere eine axiale Erstreckung auf, die vorzugsweise dem axialen Versatz der Befestigungsschraube 5 bei nur zwei Umdrehungen, besonders bevorzugt bei nur einer Umdrehung, der Befestigungsschraube 5 in dem Innengewinde entspricht. Mit anderen Worten entspricht die axiale Erstreckung des Sicherungsbereichs 20 vorzugsweise nur dem Zweifachen der Ganghöhe, besonders bevorzugt nur dem Einfachen der Ganghöhe des Innengewindes.

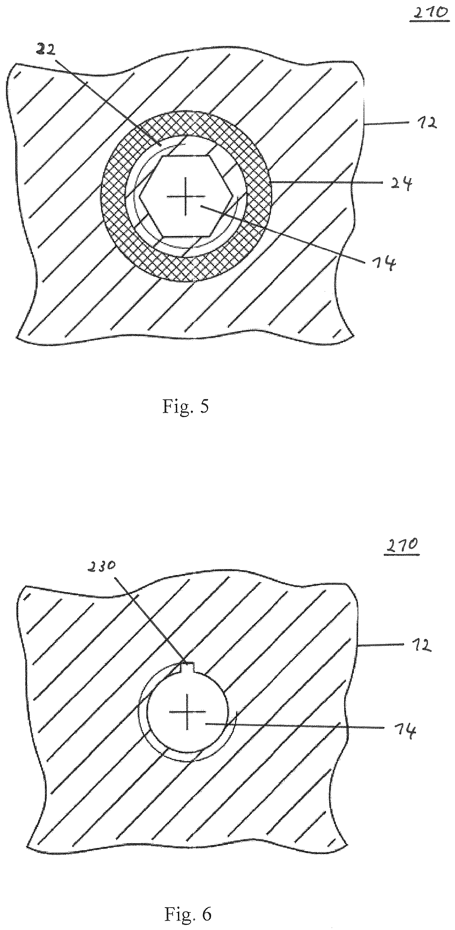

Die Figuren 5 und 6 zeigen eine fünfte Ausführungsform des additiv hergestellten Bauteils 210 mit Loch 14 und radial nach außen versetzbarem Sicherungsbereich 20. Dabei zeigt Figur 5 einen Schnitt durch den Bauteilkörper 12 quer zur zentralen Längsachse 18 im Sicherungsbereich 20 während Figur 6 einen Schnitt durch den Bauteilkörper 12 quer zur zentralen Längsachse 18 im Befestigungsbereich 16 zeigt.

Anhand von Figur 5 ist erkennbar, dass der Sicherungsbereich quer zur zentralen Längsachse 18 eine polygonale, also eine nicht runde Form, aufweist. Hierdurch kann die Sicherung der Befestigungsschraube 5 im additiven Bauteil 210 weiter wie gewünscht beeinflusst werden. Alternativ zur polygonalen Form kann jede andere nicht runde Form verwendet werden, wie beispielsweise eine ovale Form. Die Wahl der entsprechenden Form hängt dabei insbesondere von der gewünschten Kraft der Schraubensicherungsfunktion in Verbindung mit den übrigen Gestaltungsmerkmalen und dem verwendeten Material ab.

Eine weitere Variation kann durch das Einbringen von einem oder mehreren in axialer Richtung verlaufenden Schlitzen 230 in die Innenwand des Lochs 14 erfolgen, wie dies beispielhaft für einen Schlitz 230 in Figur 6 gezeigt ist. Dieser wirkt sich einerseits vorteilhaft auf das Einschraubverhalten der Befestigungsschraube 5 aus und ermöglicht andererseits eine weitere Einstellung der Klemmkraft, wenn der Schlitz im Sicherungsbereich 20 vorgesehen ist. Allerdings geht hierbei die Dichtfunktion verloren. Daher kann der Schlitz 230, wie gezeigt, auch nur im Befestigungsbereich 16 vorgesehen sein. Es ist jedoch auch bevorzugt, einen oder mehrere Schlitze 230 im Befestigungsbereich 16 und/oder im Sicherungsbereich 20 vorzusehen.

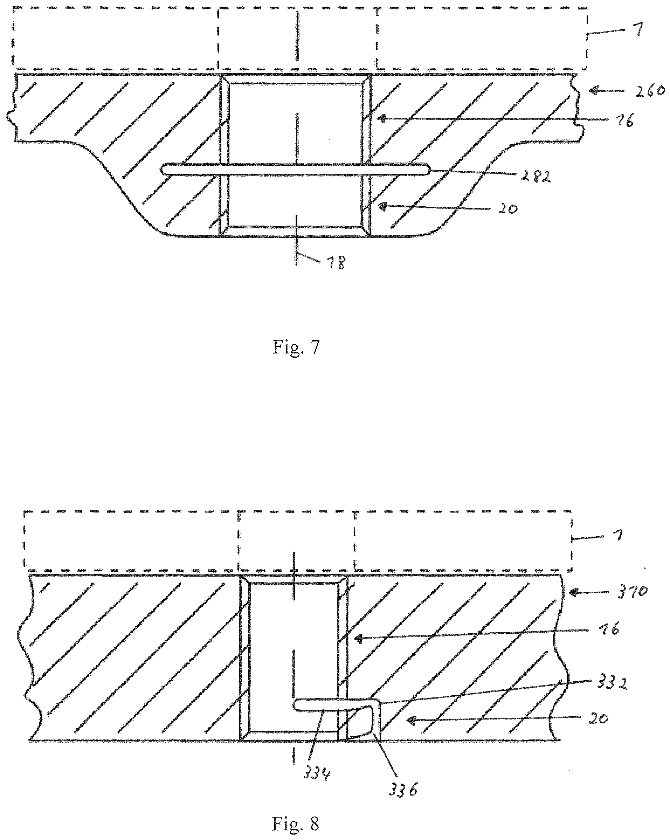

Nun bezugnehmend auf die Figuren 7 bis 9 werden drei weitere Ausführungsformen des additiv hergestellten Bauteils mit Loch diskutiert. In diesen Ausführungsformen des additiv hergestellten Bauteils ist der Sicherungsbereich 20 axial versetzbar.

Zuerst bezugnehmend auf Figur 7 wird eine sechste Ausführungsform des additiv hergestellten Bauteils 260 mit Loch 14 diskutiert. Im Unterschied zu den ersten fünf Ausführungsformen ist der Sicherungsbereich 20 nun nicht radial nach außen versetzbar, sondern axial versetzbar. Aus diesem Grund weist der Bauteilkörper 12 des additiv hergestellten Bauteils 260 eine erste Aussparung 282 auf, durch die der Befestigungsbereich 16 und der Sicherungsbereich 20 in axialer Richtung voneinander beabstandet werden. Diese erste Aussparung 282 stellt somit eine Bewegbarkeit des Sicherungsbereichs 20 in Richtung des Befestigungsbereichs 16 beim Festschrauben der Befestigungsschraube 5 sicher. Dementsprechend ist der Sicherungsbereich 20 in Einschraubrichtung der Befestigungsschraube 5 hinter dem Befestigungsbereich 16 angeordnet. Zudem weisen sowohl der Sicherungsbereich 20 wie auch der Befestigungsbereich 16 ein Innengewinde auf.

Die erste Aussparung 282 erstreckt sich quer zur zentralen Längsachse 18 radial vollumfänglich in den Bauteilkörper 12 und beabstandet den Sicherungsbereich 20 und den Befestigungsbereich 16 in axialer Richtung. Der Durchmesser der ersten Aussparung 282 liegt insbesondere zwischen dem 1,1 bis 10-fachen des Nenndurchmesser des Befestigungsbereichs 16.

Alternativ zu der Erstreckung quer zur zentralen Längsachse 18 ist es bevorzugt, dass die erste Aussparung 282 einen Winkel zwischen 1° und 80° mit der Ebene quer zur zentralen Längsachse 18 einschließt. Zudem ist es bevorzugt, dass die erste Aussparung 282 kegelstumpfartig oder pyramidenstumpfartig ausgebildet ist.

Das Innengewinde im Sicherungsbereich 20 ist vorzugsweise um das 0,01 bis 0,5-fache der Gewindesteigung des Innengewindes im Befestigungsbereich 16 zum Innengewinde im Befestigungsbereich 16 versetzt angeordnet. Besonders bevorzugt ist das Innengewinde im Sicherungsbereich 20 um das 0,05 bis 0,5-fache der Gewindesteigung des Innengewindes im Befestigungsbereich 16 zum Innengewinde im Befestigungsbereich 16 versetzt angeordnet.

Aufgrund dieser Parameter kann die Sicherungsfunktion, die in Verbindung mit einer Gewindeteilung erreicht wird, besonders gezielt eingestellt werden. Der Begriff Gewindeteilung verdeutlicht, dass das Innengewinde im Sicherungsbereich 20 zum Innengewinde im Befestigungsbereich 16 versetzt angeordnet ist.

Gerade diese Kombination aus axial versetzbarem Sicherungsbereich 20 und dem Gewindeversatz zwischen Innengewinde im Befestigungsbereich 16 und Innengewinde im Sicherungsbereich 20 sorgt dafür, dass die zum Einschrauben der Befestigungsschraube 5 erforderliche Kraft erhöht ist, während gleichzeitig keine Blockade beim Einschrauben der Befestigungsschraube 5 auftritt. Vielmehr wird auch hierdurch eine so hohe Klemmwirkung erzeugt, dass die Befestigungsschraube 5 gegen ein unbeabsichtigtes Lösen gesichert ist.

Die siebte Ausführungsform des additiv hergestellten Bauteils 310 mit Loch 14 ist ähnlich zur sechsten Ausführungsform, unterscheidet sich von dieser aber dadurch, dass die erste Aussparung 332 nur radial teilumfänglich und nicht radial vollumfänglich ausgebildet ist.

Gerade bei der teilumfänglichen Ausgestaltung der ersten Aussparung 332 ist es vorteilhaft, dass sich die erste Aussparung 332 aus einem sich in radialer Richtung erstreckenden Bereich 334 und einem sich in axialer Richtung erstreckenden Bereich 336 zusammensetzt. Der sich in axialer Richtung erstreckende Bereich 336 ist dabei bevorzugt von der Innenwand im Sicherungsbereich 20 um das 0,51 bis 1,5-fache des Nenndurchmessers im Befestigungsbereich 16 beabstandet.

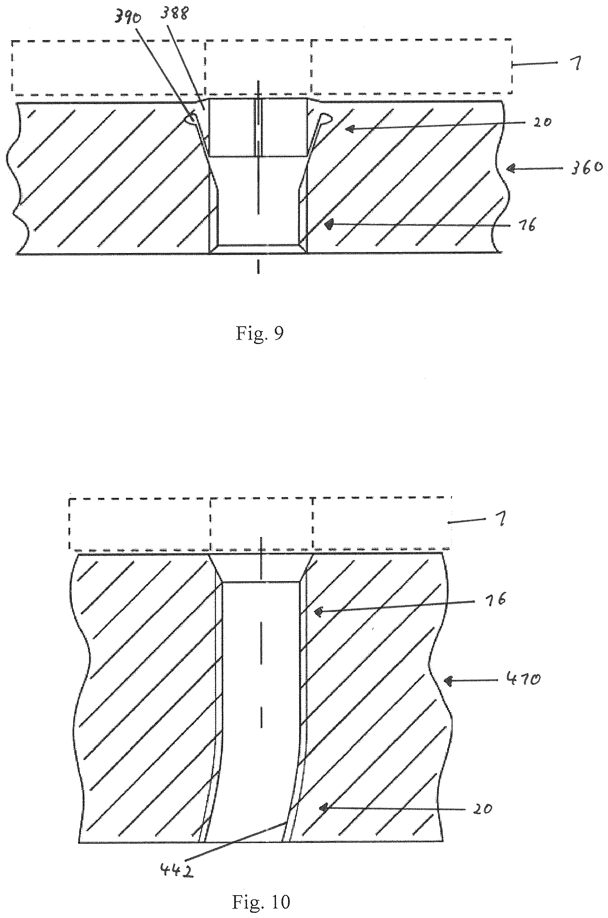

Während in der gerade beschriebenen sechsten und siebten Ausführungsform der axial versetzbare Sicherungsbereich 20 zwingend in Einschraubrichtung der Befestigungsschraube 5 hinter dem Befestigungsbereich 16 vorhanden ist, ist der axial versetzbare Sicherungsbereich 20 in der in Figur 9 gezeigten achten Ausführungsform des additiv hergestellten Bauteils 360 mit Loch 14 in Einschraubrichtung der Befestigungsschraube 5 vor dem Befestigungsbereich 16 vorgesehen.

Der Sicherungsbereich 20 wird hierbei durch mehrere Klemmarme 388 gebildet, die durch eine bezogen auf die zentrale Längsachse 18 schräg angeordnete zweite Aussparung 390 gebildet sind. Der Bauteilkörper 12 erstreckt sich im Bereich der Klemmarme 388 in axialer Richtung entgegen der Einschraubrichtung der Befestigungsschraube 5, so dass diese Bereiche an der Oberfläche des additiv hergestellten Bauteils 360 erhaben ausgebildet sind.

Die zweiten Aussparungen 390 schließen mit der zentralen Längsachse 18 vorzugsweise einen Winkel zwischen 1° und 45° ein. Die zweite Aussparung 390 ist vorteilhafterweise kegelstumpfartig oder pyramidenstumpfartig ausgebildet.

Bei Verwendung passiert die Befestigungsschraube 5 zunächst den Sicherungsbereich 20 und wird anschließend im Befestigungsbereich 16 festgeschraubt. Sobald das zweite Bauteil auf die erhaben ausgebildeten Bereiche an der dem zweiten Bauteil 1 zugewandten Oberfläche des additiv hergestellten Bauteils 360 drückt, werden die Klemmarme 388 in axialer Richtung versetzt.

Aufgrund der schräg angeordneten zweiten Aussparung 390 werden sie zusätzlich radial nach innen versetzt. Dadurch ist die zum Einschrauben der Befestigungsschraube 5 erforderlich Kraft erhöht, wodurch eine so hohe Klemmwirkung erzeugt wird, dass die Befestigungsschraube 5 gegen ein unbeabsichtigtes Lösen gesichert ist.

Die Ausgestaltung kann dabei entweder so erfolgen, dass die Klemmarme 388 mit dem Bauteilkörper 12 verbunden bleiben. In diesem Fall liegt keine Selbstsicherung vor und die Klemmkraft wird beim Lösen der Befestigungsschraube 5 wieder abgebaut.

Alternativ ist eine Sollbruchstelle vorgesehen, sodass die Klemmarme 388 von dem Bauteilkörper 12 beim Einschrauben der Befestigungsschraube 5 abgetrennt werden.

Abschließend und bezugnehmend auf Figur 10 wird eine neunte Ausführungsform des additiv hergestellten Bauteils 410 mit Loch 14 vorgestellt. Diese Ausführungsform unterscheidet sich von den vorherigen Ausführungsformen dadurch, dass der Sicherungsbereich 20 krummlinig verläuft. Der krummlinige Verlauf 442 wird durch eine Kurvenform des Lochs 14 im Sicherungsbereich 20 realisiert.

Aufgrund dieses krummlinigen Verlaufs 442 des Lochs 14 im Sicherungsbereich 20, dem die Befestigungsschraube 5 beim Einschrauben folgt, ist die zum Einschrauben der Befestigungsschraube 5 erforderliche Kraft erhöht.

Bei diesem Vorgehen wird somit die Elastizität des Materials der Befestigungsschraube 5 genutzt. Dies führt dazu, dass eine so hohe Klemmwirkung erzeugt wird, dass die Befestigungsschraube 5 gegen ein unbeabsichtigtes Lösen gesichert ist.

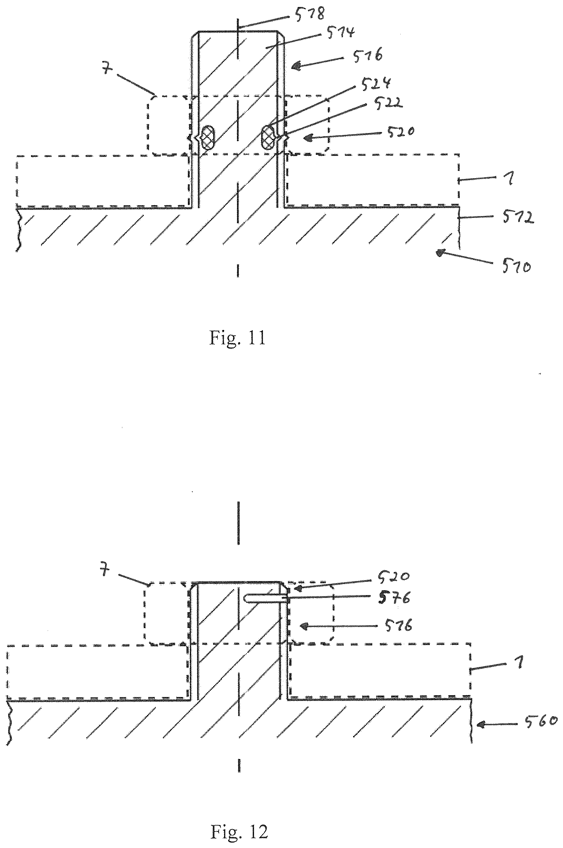

Nun bezugnehmend auf die Figuren 11 bis 13 werden bevorzugte Ausführungsformen einer zweiten Variante eines additiv hergestellten Bauteils 510; 560; 610 diskutiert. Von der ersten Variante unterscheidet sich das Bauteil gemäß der zweiten Variante dadurch, dass anstelle eines Lochs 14 ein Vorsprung 514 vorgesehen ist. Mit anderen Worten handelt es sich bei der ersten Alternative um ein additiv hergestelltes Bauteil 10; 60; 110; 160; 210; 260; 310; 360; 410 mit weiblichem Verbindungsmerkmal und bei der zweiten Alternative um ein additiv hergestelltes Bauteil 510; 560; 610 mit männlichem Verbindungsmerkmal. Die Funktionsweise der zweite Alternative des additiv hergestellten Bauteils 510; 560; 610 ist ähnlich zu der ersten Alternative und wird nachfolgend erläutert.

Das additiv hergestellte Bauteil 510; 560; 610 weist in jeder dieser Ausführungsformen einen Vorsprung 514 auf, der eine Außenwand eines Bauteilkörpers 512 des additiv hergestellten Bauteils 510; 560; 610 bereitstellt. Die Außenwand umfasst einen zylindrischen Befestigungsbereich 516 mit einem Außengewinde, der eine zentrale Längsachse 518 des Vorsprungs 514 definiert, und einen Sicherungsbereich 520 zum kraftschlüssigen Sichern einer Mutter 7 an dem Vorsprung 514, insbesondere durch Klemmen, so dass der Sicherungsbereich 520 eine Sicherungsfunktion bereitstellt.

Zur besseren Nachvollziehbarkeit werden die Ausführungsformen der zweiten Alternative des additiv hergestellten Bauteils 510; 560; 610 mit Vorsprung 514 ebenfalls im Rahmen der Verwendung des Bauteils 510; 560; 610 in einem Bauteilverbund verdeutlicht. Der beispielhafte Bauteilverbund besteht, neben dem additiv hergestellten Bauteil 510; 560; 610 als erstem Bauteil, aus dem zweiten Bauteil 1 mit Durchgangsloch 3 sowie einer Mutter 7.

Figur 11 zeigt die erste Ausführungsform des additiv hergestellten Bauteils 510 mit Vorsprung 514. In dieser Ausführungsform ist der Sicherungsbereich 520 radial nach innen versetzbar. Der Aufbau des Sicherungsbereichs ist daher analog zu dem radial nach außen versetzbaren Sicherungsbereich der Ausführungsformen des additiv hergestellten Bauteils 10; 60; 110; 160; 210 gemäß den Figuren 1 bis 6. Allerdings erfolgt das radiale Nachgeben bezogen auf die zentrale Längsachse 518 nach innen und nicht nach außen. In diesem Bereich ist also kein Vollmaterial vorhanden.

Während der Vorsprung 514 im Befestigungsbereich 516 daher zylindrisch ausgebildet ist und einen Außendurchmesser aufweist, der zum Innendurchmesser der verwendeten Mutter 7 passt, weist der Sicherungsbereich 520 einen Außendurchmesser auf, der im Vergleich zu dem Innendurchmesser der Mutter 7 vergrößert ist. Beispielhaft ist der Durchmesser im Sicherungsbereich 520 größer als der Durchmesser im Befestigungsbereich 516.

Der radial versetzbare Sicherungsbereich 520 wird gebildet durch, ausgehend von der radialen Außenseite radial nach innen, einen Wandbereich 522 und einen elastischen Bereich 524. Der Wandbereich weist eine Dicke von 0,1 mm bis 5 mm auf. Der elastische Bereich 524 ist radial vollumfänglich vorhanden. Wie dargestellt weist der elastische Bereich 524 eine Gitterstruktur auf. Alternativ kann der elastische Bereich 524 ebenso durch einen Hohlraum gebildet werden, je nach Anwendung. Weiterhin weist der Wandbereich 522 im dargestellten Beispiel ein Außengewinde auf.

Gerade aufgrund der Dicke des Wandbereichs 522 allein oder in Kombination mit dem als Gitterstruktur, vorzugsweise als zweidimensionale Gitterstruktur, ausgebildeten elastischen Bereich 524 lässt sich die später erzeugte Klemmkraft in Verbindung mit der Mutter 7 gezielt einstellen. In Abhängigkeit von der Art der additiven Herstellung des Bauteils 510 können eine oder mehrere Öffnungen im Wandbereich 522 vorgesehen sein, damit das im elastischen Bereich 524 vorhandene aber bei der Herstellung des Bauteils 510 nicht verwendete Materialpulver aus dem elastischen Bereich 524 des Bauteils 510 abgeführt werden kann.

Aufgrund dieser Kombination aus radial nach innen versetzbarer Außenwand des Vorsprungs 514 und dem im Vergleich zum Innendurchmesser der Mutter 7 vergrößertem Außendurchmesser im radial nach innen versetzbaren Sicherungsbereich 520, ist die zum Festschrauben der Mutter 7 erforderliche Kraft erhöht, während gleichzeitig keine Blockade beim Festschrauben der Mutter 7 auftritt. Vielmehr wird hierdurch eine so hohe Klemmwirkung erzeugt, dass die Mutter 7 gegen ein unbeabsichtigtes Lösen gesichert ist.

Zur Herstellung des Bauteilverbunds wird das Durchgangsloch 3 des zweiten Bauteils 1 in Übereinstimmung mit dem Vorsprung 514 des additiv hergestellten Bauteils 510 angeordnet. Anschließend wird die Mutter 7 mit dem auf dem Vorsprung 514 vorgesehenen Außengewinde in Eingriff gebracht und festgeschraubt. Als Material für das additiv hergestellte Bauteil kommen auch hier sowohl Metall wie auch Kunststoff in Frage, wobei insbesondere aufgrund des Sicherungsbereichs 520, der die Sicherungsfunktion zum kraftschlüssigen Sichern der Mutter 7 auf dem Vorsprung 514 des additiv hergestellten Bauteils 510 bereitstellt, die Verwendung von Metall bevorzugt ist.

Nun bezugnehmend auf Figur 12 wird eine zweite Ausführungsform des additiv hergestellten Bauteils 560 mit Vorsprung 514 diskutiert. In diesem Fall ist der Sicherungsbereich 520 axial versetzbar und wird in Verbindung mit einer Gewindeteilung verwendet. Dies bedeutet, dass im Sicherungsbereich 520 zwingend ein Außengewinde vorhanden ist. Allerdings ist das Außengewinde im Sicherungsbereich 520 zum Außengewinde im Befestigungsbereich 516 versetzt angeordnet.

Um das kraftschlüssige Sichern der Mutter 7 im additiv hergestellten Bauteil 560 zu realisieren, sind der Befestigungsbereich 516 und der Sicherungsbereich 520 in axialer Richtung voneinander beabstandet. Dies wird im vorliegenden Fall über eine erste Aussparung 576 realisiert. Diese erste Aussparung 576 stellt eine Bewegbarkeit des Sicherungsbereichs 520 in Richtung des Befestigungsbereichs 516 beim Festschrauben der Mutter 7 sicher.

Wie dargestellt ist die erste Aussparung 576 teilumfänglich ausgebildet und erstreckt sich quer zur zentralen Längsachse 518 in den Bauteilkörper 512, so dass sie den Sicherungsbereich 520 und den Befestigungsbereich 516 in axialer Richtung beabstandet. Alternativ zu der Erstreckung quer zur zentralen Längsachse 518 ist es bevorzugt, dass die erste Aussparung 576 einen Winkel zwischen 1° und 80° mit der zentralen Längsachse 518 einschließt. Zudem ist es bevorzugt, dass die erste Aussparung 576 kegelstumpfartig oder pyramidenstumpfartig ausgebildet ist.

Das Außengewinde im Sicherungsbereich 520 ist dabei vorzugsweise um das 0,01 bis 0,5-fache der Gewindesteigung des Außengewindes im Befestigungsbereich 516 beabstandet. Besonders bevorzugt ist das Außengewinde im Sicherungsbereich 520 um das 0,05 bis 0,5-fache der Gewindesteigung des Außengewindes im Befestigungsbereich 516 beabstandet.

Aufgrund dieser Kombination aus axial versetzbarem Sicherungsbereich 520 und dem Gewindeversatz zwischen Außengewinde im Befestigungsbereich 516 und Außengewinde im Sicherungsbereich 520, ist die zum Festschrauben der Mutter 7 erforderliche Kraft erhöht, wodurch eine so hohe Klemmwirkung erzeugt wird, dass die Mutter 7 gegen ein unbeabsichtigtes Lösen gesichert ist.

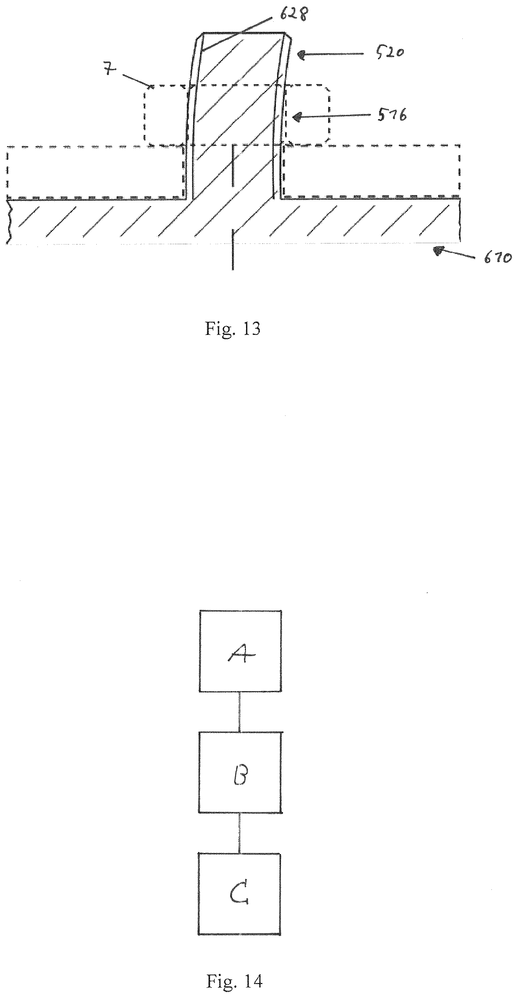

Schließlich und bezugnehmend auf Figur 13 wird eine dritte Ausführungsform des additiv hergestellten Bauteils 610 mit Vorsprung 514 erläutert. Hier ist der Sicherungsbereich 520 so ausgestaltet, dass er bezogen auf die zentrale Längsachse 518 krummlinig verläuft. Dieser krummlinige Verlauf 628 wird durch eine Kurvenform des Vorsprungs 514 im Sicherungsbereich 520 realisiert. Aufgrund dieses krummlinigen Verlaufs 628 des Vorsprungs, dem die Mutter 7 beim Festschrauben folgt, ist die zum Festschrauben der Mutter 7 erforderliche Kraft erhöht. Auch dies führt somit dazu, dass eine so hohe Klemmwirkung erzeugt wird, dass die Mutter 7 gegen ein unbeabsichtigtes Lösen gesichert ist.

Die Vorteile der Ausführungsformen des additiv hergestellten Bauteils 510; 560; 610 mit Vorsprung 514 entsprechen den Vorteilen der Ausführungsformen des additiv hergestellten Bauteils 10; 60; 110; 160; 210; 260; 310; 360; 410 mit Loch 14. Daher wird zur Vermeidung von Wiederholungen auf die obigen Ausführungen verwiesen.

Eine Ausführungsform eines Herstellungsverfahrens für ein additiv hergestelltes Bauteil wird anhand von Figur 14 erläutert. In einem ersten Schritt A erfolgt ein Bereitstellen einer dreidimensionalen Zeichnung des Bauteils. Anschließend erfolgt in Schritt B ein Umwandeln der dreidimensionalen Zeichnung in ein maschinenlesbares Schichtmodel. Ein additives Fertigen des Bauteils, vorzugsweise aus Metall, erfolgt abschließend in Schritt C.

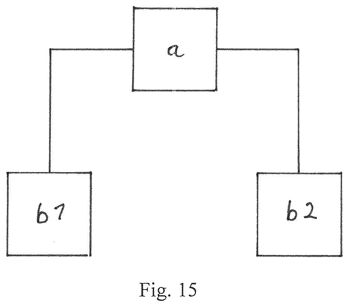

Figur 15 zeigt abschließend eine Ausführungsform eines Verbindungsverfahrens des additiv hergestellten Bauteils als erstes Bauteil mit einem zweiten Bauteil zur Herstellung des Bauteilverbunds. In einem ersten Schritt a erfolgt ein Bereitstellen des ersten Bauteils und des zweiten Bauteils mit einem Durchgangsloch. Das erste Bauteil ist ein additiv hergestelltes Bauteil gemäß einer der oben beschriebenen Ausführungsformen.

Wenn das erste Bauteil ein additiv hergestelltes Bauteil mit Loch ist, dann erfolgt in einem zweiten Schritt b1 ein Anordnen des Durchgangslochs des zweiten Bauteils in Übereinstimmung mit dem im ersten Bauteil vorhanden Loch sowie ein Befestigen des ersten und des zweiten Bauteils aneinander mittels einer Befestigungsschraube.

Wenn das erste Bauteil ein additiv hergestelltes Bauteil mit Vorsprung ist, dann erfolgt in einem zweiten Schritt b2 ein Anordnen des Durchgangslochs des zweiten Bauteils in Übereinstimmung mit dem Vorsprung des ersten Bauteils sowie ein Befestigen des ersten und des zweiten Bauteils aneinander mittels einer Mutter.

### 6. Bezugszeichenliste

1 Bauteil
3 Durchgangsloch
5 Befestigungsschraube
7 Mutter
10 additiv hergestelltes Bauteil mit Loch (1. Ausführungsform)
12 Bauteilkörper
14 Loch
16 Befestigungsbereich
18 zentrale Längsachse
20 Sicherungsbereich
22 Wandbereich
24 elastischer Bereich
60 additiv hergestelltes Bauteil mit Loch (2. Ausführungsform)
76 erster Übergang
110 additiv hergestelltes Bauteil mit Loch (3. Ausführungsform)
128 zweiter Übergang
160 additiv hergestelltes Bauteil mit Loch (4. Ausführungsform)
210 additiv hergestelltes Bauteil mit Loch (5. Ausführungsform)
230 Schlitz
260 additiv hergestelltes Bauteil mit Loch (6. Ausführungsform)
282 erste Aussparung
310 additiv hergestelltes Bauteil mit Loch (7. Ausführungsform)
332 erste Aussparung
334 sich in radialer Richtung erstreckender Bereich
336 sich in axialer Richtung erstreckender Bereich
360 additiv hergestelltes Bauteil mit Aussparung (8. Ausführungsform)
388 Klemmarm
390 zweite Aussparung
410 additiv hergestelltes Bauteil mit Loch (9. Ausführungsform)
442 krummliniger Verlauf
510 additiv hergestelltes Bauteil mit Vorsprung (1. Ausführungsform)
512 Bauteilkörper
514 Vorsprung
516 Befestigungsbereich
518 zentrale Längsachse
520 Sicherungsbereich
522 Wandbereich
524 elastischer Bereich
560 additiv hergestelltes Bauteil mit Vorsprung (2. Ausführungsform)
576 erste Aussparung
610 additiv hergestelltes Bauteil mit Vorsprung (3. Ausführungsform)
628 krummliniger Verlauf

## Patentansprüche

1. Ein additiv hergestelltes Bauteil (10; 60; 110; 160; 210; 260; 310; 360; 410) mit einem Loch (14), das eine Innenwand in einem Bauteilkörper (12) des additiv hergestellten Bauteils (10; 60; 110; 160; 210; 260; 310; 360; 410) bereitstellt, wobei die Innenwand umfasst:
a. einen Befestigungsbereich (16) mit einem Innengewinde, der eine zentrale Längsachse (18) des Lochs (14) definiert, und
b. einen Sicherungsbereich (20) zum kraftschlüssigen Sichern einer Befestigungsschraube (5) in dem Loch (14), insbesondere durch Klemmen, so dass der Sicherungsbereich (20) eine Schraubensicherungsfunktion bereitstellt, **dadurch gekennzeichnet, dass**
c. der Sicherungsbereich (20)
c1. radial nach außen versetzbar ist, wobei der radial nach außen versetzbare Sicherungsbereich (20) gebildet wird durch, ausgehend von der zentralen Längsachse (18) radial nach außen, einen Wandbereich (22) und einen elastischen Bereich (24), wobei der Wandbereich (22) eine Dicke von 0,1 mm bis 5 mm aufweist und der elastische Bereich (24) radial vollumfänglich vorhanden ist,
c2. axial versetzbar ist, wobei der Sicherungsbereich ein Innengewinde aufweist und das Innengewinde im Sicherungsbereich zum Innengewinde im Befestigungsbereich versetzt angeordnet ist, oder
c3. bezogen auf die zentrale Längsachse (18) krummlinig verläuft.

2. Das additiv hergestellte Bauteil (10; 60; 110; 160; 210) gemäß Patentanspruch 1 mit Merkmal c1, bei dem der elastische Bereich (24) einen Hohlraum oder eine Gitterstruktur aufweist.

3. Das additiv hergestellte Bauteil (10; 60; 110; 160; 210) gemäß Patentanspruch 1 mit Merkmal c1 oder Patentanspruch 2, bei dem der Wandbereich (24) im Sicherungsbereich (20) ein Innengewinde aufweist.

4. Das additiv hergestellte Bauteil (10; 60; 110; 160; 210) gemäß einem der Patentansprüche 1 mit Merkmal c1 bis 3, bei dem im Befestigungsbereich (20) und/oder im Sicherungsbereich (16) mindestens ein sich in axialer Richtung erstreckender Schlitz (230) vorhanden ist.

5. Das additiv hergestellte Bauteil (260; 310) gemäß Patentanspruch 1 mit Merkmal c2, bei dem der Sicherungsbereich (20) und der Befestigungsbereich (16) durch eine erste Aussparung (282; 332) voneinander beabstandet sind.

6. Das additiv hergestellte Bauteil (260; 310) gemäß Patentanspruch 5, bei dem die erste Aussparung (282; 332) radial vollumfänglich oder teilumfänglich ausgebildet ist.

7. Das additiv hergestellte Bauteil (360) gemäß Patentanspruch 1 mit Merkmal c2, bei dem der Sicherungsbereich (20) eine Mehrzahl von integral ausgebildeten Klemmarmen (388) benachbart zu einer Oberfläche des Bauteilkörpers (12) des additiv hergestellten Bauteils (360) aufweist.

8. Das additiv hergestellte Bauteil (10; 60; 110; 160; 210; 260; 310; 360; 410) gemäß einem der vorhergehenden Patentansprüche,
a) bei dem das Loch (14) ein Durchgangsloch oder ein Sackloch ist und/oder
b) das aus Metall oder Kunststoff besteht.

9. Ein additiv hergestelltes Bauteil (510; 560; 610) mit einem Vorsprung, der eine Außenwand eines Bauteilkörpers (512) des additiv hergestellten Bauteils (510; 560; 610) bereitstellt, wobei die Außenwand umfasst:
a. einen Befestigungsbereich (516) mit einem Außengewinde, der eine zentrale Längsachse (518) des Vorsprungs (514) definiert, und
b. einen Sicherungsbereich (520) zum kraftschlüssigen Sichern einer Mutter (7) an dem Vorsprung (514), insbesondere durch Klemmen, so dass der Sicherungsbereich (520) eine Sicherungsfunktion bereitstellt, **dadurch gekennzeichnet, dass**
c. der Sicherungsbereich (520)
c1. radial nach innen versetzbar ist, wobei der radial versetzbare Sicherungsbereich (520) gebildet wird durch, ausgehend von der radialen Außenseite radial nach innen, einen Wandbereich (522) und einen elastischen Bereich (524), wobei der Wandbereich (522) eine Dicke von 0,1 mm bis 5 mm aufweist und der elastische Bereich (524) radial vollumfänglich vorhanden ist,
c2. axial versetzbar ist, wobei der Sicherungsbereich ein Außengewinde aufweist und das Außengewinde im Sicherungsbereich zum Außengewinde im Befestigungsbereich versetzt angeordnet ist, oder
c3. bezogen auf die zentrale Längsachse (518) krummlinig verläuft.

10. Das additiv hergestellte Bauteil (510) gemäß Patentanspruch 9 mit Merkmal c1, wobei der elastische Bereich (524) einen Hohlraum oder eine Gitterstruktur aufweist.

11. Das additiv hergestellte Bauteil (510) gemäß Patentanspruch 9 mit Merkmal c1 oder Patentanspruch 10, wobei der Wandbereich (522) im Sicherungsbereich (520) ein Außengewinde aufweist.

12. Das additiv hergestellte Bauteil (560) gemäß Patentanspruch 9 mit Merkmal c2, wobei der Sicherungsbereich (520) und der Befestigungsbereich (516) durch eine erste Aussparung (576) voneinander beabstandet sind, wobei die erste Aussparung (576) vorzugsweise teilumfänglich ausgebildet ist.

13. Das additiv hergestellte Bauteil (510; 560; 610) gemäß einem der Patentansprüche 9 bis 12, das aus Metall oder Kunststoff besteht.

14. Ein Bauteilverbund bestehend aus einem ersten Bauteil und einem zweiten Bauteil (1) mit einem Durchgangsloch (3), **dadurch gekennzeichnet, dass** das erste Bauteil ein additiv hergestelltes Bauteil (10; 60; 110; 160; 210; 260; 310; 360; 410) gemäß einem der Patentansprüche 1 bis 8 ist und das zweite Bauteil (1) an dem ersten Bauteil mittels einer Befestigungsschraube (5) befestigt ist.

15. Ein Bauteilverbund bestehend aus einem ersten Bauteil und einem zweiten Bauteil (1) mit einem Durchgangsloch (3), **dadurch gekennzeichnet, dass** das erste Bauteil ein additiv hergestelltes Bauteil (510; 560; 610) gemäß einem der Patentansprüche 9 bis 13 ist und das zweite Bauteil (1) an dem ersten Bauteil mittels einer Mutter (7) befestigt ist.

16. Ein Herstellungsverfahren für ein additiv hergestelltes Bauteil (10; 60; 110; 160; 210; 260; 310; 360; 410; 510; 560; 610) gemäß einem der Patentansprüche 1 bis 13, **gekennzeichnet durch** die folgenden Schritte:
a. Bereitstellen einer dreidimensionalen Zeichnung des Bauteils,
b. Umwandeln der dreidimensionalen Zeichnung in ein maschinenlesbares Schichtmodel und
c. additives Fertigen des Bauteils (10; 60; 110; 160; 210; 260; 310; 360; 410; 510; 560; 610), vorzugsweise aus Metall.

17. Ein Verbindungsverfahren eines ersten Bauteils mit einem zweiten Bauteil (1) zur Herstellung eines Bauteilverbunds gemäß Patentanspruch 14 oder 15, **gekennzeichnet durch** die Schritte:
a. Bereitstellen eines ersten Bauteils und eines zweiten Bauteils (1) mit einem Durchgangsloch (3), wobei das erste Bauteil ein additiv hergestelltes Bauteil (10; 60; 110; 160; 210; 260; 310; 360; 410; 510; 560; 610) gemäß einem der Patentansprüche 1 bis 8 oder 9 bis 13 ist, und
b1. wenn das erste Bauteil ein additiv hergestelltes Bauteil (10; 60; 110; 160; 210; 260; 310; 360; 410) gemäß einem der Patentansprüche 1 bis 8 ist, dann Anordnen des Durchgangslochs (3) des zweiten Bauteils (1) in Übereinstimmung mit dem im ersten Bauteil (10; 60; 110; 160; 210; 260; 310; 360; 410) vorhandenen Loch (14) und Befestigen des ersten (10; 60; 110; 160; 210; 260; 310; 360; 410) und des zweiten Bauteils (1) aneinander mittels einer Befestigungsschraube (5), oder
b2. wenn das erste Bauteil ein additiv hergestelltes Bauteil (510; 560; 610) gemäß einem der Patentansprüche 9 bis 13 ist, dann Anordnen des Durchgangslochs (3) des zweiten Bauteils (1) in Übereinstimmung mit dem Vorsprung (514) des ersten Bauteils (510; 560; 610) und Befestigen des ersten (510; 560; 610) und des zweiten Bauteils (1) aneinander mittels einer Mutter (7).

## Claims

1. An additively manufactured component (10; 60; 110; 160; 210; 260; 310; 360; 410) with a hole (14), providing an inner wall in a component body (12) of the additively manufactured component (10; 60; 110; 160; 210; 260; 310; 360; 410), with the inner wall comprising:
a. a fastening portion (16) with an inner thread, wherein the fastening portion (16) defines a central longitudinal axis (18) of the hole (14), and
b. a securing portion (20) for securing a fastening screw (5) in a force-fit manner in the hole (14), in particular by clamping so that the securing portion (20) provides a screw securing function, **characterized in that**
c. the securing portion (20)
c1. is radially displaceable to the outside, wherein the securing portion (20) which is radially displaceable to the outside is formed by, starting from the central longitudinal axis (18) radially to the outside, a wall portion (22) and an elastic portion (24), wherein the wall portion (22) has a strength of 0.1 mm to 5 mm and the elastic portion (24) is present radially around the complete circumference,
c2. is axially displaceable, wherein the securing portion includes an inner thread and the inner thread in the securing portion is arranged in a displaced manner to the inner thread in the fastening portion, or
c3. extends curvilinear with respect to the central longitudinal axis (18).

2. The additively manufactured component (10; 60; 110; 160; 210) according to claim 1 with feature c1, wherein the elastic portion (24) comprises a cavity or a grid structure.

3. The additively manufactured component (10; 60; 110; 160; 210) according to claim 1 with feature c1 or claim 2, wherein the wall portion (24) comprises an inner thread in the securing portion (20).

4. The additively manufactured component (10; 60; 110; 160; 210) according to one of the claims 1 with feature c1 to 3, wherein the fastening portion (20) and/or the securing portion (16) has at least one slot (230) extending in axial direction.

5. The additively manufactured component (260; 310) according to claim 1 with feature c2, wherein the securing portion (20) and the fastening portion (60) are spaced apart by a first recess (282; 332).

6. The additively manufactured component (260; 310) according to claim 5, wherein the first recess (282; 332) is configured radially around the complete circumference or partial circumference.

7. The additively manufactured component (360) according to claim 1 with feature c2, wherein the securing portion (20) comprises a plurality of integrally formed clamping arms (388) adjacent to a surface of the component body (12) of the additively manufactured component (360).

8. The additively manufactured component (10; 60; 110; 160; 210; 260; 310; 360; 410) according to one of the preceding claims,
a) wherein the hole (14) is a passage hole or a blind hole and/or
b) which is made of metal or plastic material.

9. An additively manufactured component (510; 560; 610) wherein a projection provides an outer wall of a component body (512) of the additively manufactured component (510; 560; 610), wherein the outer wall comprises:
a. a fastening portion (516) with an outer thread, wherein the fastening portion (516) defines a central longitudinal axis (518) of the projection (514), and
b. a securing portion (520) for securing a nut (7) in a force-fit manner to the projection (514), in particular by clamping, so that the securing portion (520) provides a securing function, **characterized in that**
c. the securing portion (520)
c1. is radially displaceable to the inside, wherein the radially displaceable securing portion (520) is formed by, starting from the radial outside, radially to the inside, a wall portion (522) and an elastic portion (524), wherein the wall portion (522) has a strength of 0.1 mm to 5 mm and the elastic portion (524) is present radially around the complete circumference,
c2. is axially displaceable, wherein the securing portion includes an outer thread and the outer thread in the securing portion is arranged in a displaced manner to the outer thread in the fastening portion, or
c3. extends curvilinear with respect to the central longitudinal axis (518).

10. The additively manufactured component (510) according to claim 9 with feature c1, wherein the elastic portion (524) comprises a cavity or a grid structure.

11. The additively manufactured component (510) according to claim 9 with feature c1 or claim 10, wherein the wall portion (522) has an outer thread in the securing portion (520).

12. The additively manufactured component (560) according to claim 9 with feature c2, wherein the securing portion (520) and the fastening portion (516) are spaced apart by a first recess (576), wherein the first recess (576) is preferably formed around the partial circumference.

13. The additively manufactured component (510; 560; 610) according to one of the claims 9 to 12, wherein same is made of metal or plastic material.

14. A component bond out of a first component and a second component (1) with a passage hole (3), **characterized in that** the first component is an additively manufactured component (10; 60; 110; 160; 210; 260; 310; 360; 410) according to one of the claims 1 to 8 and the second component (1) is fastened to the first component by means of a fastening screw (5).

15. A component bond out of a first component and a second component (1) with a passage hole (3) **characterized in that** the first component is an additively manufactured component (510; 560; 610) according to one of the claims 9 to 13 and the second component (1) is fastened to the first component by means of a nut (7).

16. A manufacturing method for an additively manufactured component (10; 60; 110; 160; 210; 260; 310; 360; 410; 510; 560; 610) according to one of the claims 1 to 13, **characterized by** the following steps:
a. providing a three-dimensional drawing of the component
b. converting the three-dimensional drawing into a machine-readable layer model and
c. additive manufacturing of the component (10; 60; 110; 160; 210; 260; 310; 360; 410; 510; 560; 610), preferably out of metal.

17. A connection method of a first component with a second component (1) for establishing a component bond according to claim 14 or 15, **characterized by** the steps:
a. providing a first component and a second component (1) with a passage hole (3), wherein the first component is an additively manufactured component (10; 60; 110; 160; 210; 260; 310; 360; 410; 510; 560; 610) according to one of the claims 1 to 8 or 9 to 13, and
b1. when the first component is an additively manufactured component (10; 60; 110; 160; 210; 260; 310; 360; 410) according to one of the claims 1 to 8, arranging the passage hole (3) of the second component (1) in accordance with the hole (14) in the first component (10; 60; 110; 160; 210; 260; 310; 360; 410) and fastening the first (10; 60; 110; 160; 210; 260; 310; 360; 410) and the second component (1) to each other by means of a fastening screw (5), or
b2. when the first component is an additively manufactured component (510; 560; 610) according to one of the claims 9 to 13, arranging the passage hole (3) of the second component (1) in accordance with the projection (514) of the first component (510; 560; 610) and fastening the first (510; 560; 610) and the second component (1) to each other by means of a nut (7).

## Revendications

1. Composant fabriqué de manière additive (10 ; 60 ; 110 ; 160 ; 210 ; 260 ; 310 ; 360 ; 410), doté d'un trou (14) fournissant une paroi intérieure dans un corps de composant (12) du composant fabriqué de manière additive (10 ; 60 ; 110 ; 160 ; 210 ; 260 ; 310 ; 360 ; 410), dans lequel la paroi intérieure comporte :
a. une région de fixation (16) dotée d'un filetage intérieur, lequel définit un axe longitudinal central (18) du trou (14), et
b. une région de blocage (20) pour le blocage par adhérence d'une vis de fixation (5) dans le trou (14), en particulier par serrage, de sorte que la région de blocage (20) fournit une fonction de blocage de vis, **caractérisé en ce que**
c. la région de blocage (20)
c1. peut être déplacée radialement vers l'extérieur, la région de blocage (20) déplaçable radialement vers l'extérieur étant formée, à partir de l'axe longitudinal central (18) et radialement vers l'extérieur, par une région de paroi (22) et une région élastique (24), la région de paroi (22) présentant une épaisseur de 0,1 mm à 5 mm et la région élastique (24) étant présente sur l'ensemble de la périphérie radiale,
c2. peut être déplacée axialement, la région de blocage présentant un filetage intérieur et le filetage intérieur dans la région de blocage étant disposé en décalage par rapport au filetage intérieur dans la région de fixation, ou
c3. s'étend de façon curviligne par rapport à l'axe longitudinal central (18).

2. Composant fabriqué de manière additive (10 ; 60 ; 110 ; 160 ; 210) selon la revendication 1 avec la caractéristique c1, dans lequel la région élastique (24) présente un espace creux ou une structure de grille.

3. Composant fabriqué de manière additive (10 ; 60 ; 110; 160 ; 210) selon la revendication 1 avec la caractéristique c1 ou selon la revendication 2, dans lequel la région de paroi (22) présente un filetage intérieur dans la région de blocage (20).

4. Composant fabriqué de manière additive (10 ; 60 ; 110 ; 160 ; 210) selon la revendication 1 avec la caractéristique c1 à 3, dans lequel il est prévu au moins une fente (230) s'étendant dans la direction axiale dans la région de fixation (20) et/ou dans la région de blocage (16).

5. Composant fabriqué de manière additive (260 ; 310) selon la revendication 1 avec la caractéristique c2, dans lequel la région de blocage (20) et la région de fixation (16) sont espacées l'une de l'autre par un premier évidement (282 ; 332).

6. Composant fabriqué de manière additive (260 ; 310) selon la revendication 5, dans lequel le premier évidement (282 ; 332) est conçu sur l'ensemble ou sur une partie de la périphérie radiale.

7. Composant fabriqué de manière additive (360) selon la revendication 1 avec la caractéristique c2, dans lequel la région de blocage (20) présente une pluralité de bras de serrage (388) conçus intégralement de façon adjacente à une surface du corps de composant (12) du composant fabriqué de manière additive (360).

8. Composant fabriqué de manière additive (10 ; 60 ; 110 ; 160 ; 210 ; 260 ; 310 ; 360 ; 410) selon l'une des revendications précédentes,
a) dans lequel le trou (14) est un trou de passage ou un trou borgne et/ou
b) lequel est constitué de métal ou de plastique.

9. Composant fabriqué de manière additive (510 ; 560 ; 610) doté d'une saillie, laquelle fournit une paroi extérieure d'un corps de composant (512) du composant fabriqué de manière additive (510 ; 560 ; 610), dans lequel la paroi extérieure comporte :
a. une région de fixation (516) dotée d'un filetage extérieur, lequel définit un axe longitudinal central (518) de la saillie (514), et
b. une région de blocage (520) pour le blocage par adhérence d'un écrou (7) contre la saillie (514), en particulier par serrage, de sorte que la région de blocage (520) fournit une fonction de blocage, **caractérisé en ce que**
c. la région de blocage (520)
c1. peut être déplacée radialement vers l'intérieur, la région de blocage (520) déplaçable radialement vers l'extérieur étant formée par une région de paroi (522) et une région élastique (524), radialement vers l'intérieur à partir du côté extérieur radial, la région de paroi (522) présentant une épaisseur de 0,1 mm à 5 mm et la région élastique (524) étant présente sur l'ensemble de la périphérie radiale,
c2. peut être déplacée axialement, la région de blocage présentant un filetage extérieur et le filetage extérieur dans la région de blocage étant disposé en décalage par rapport au filetage extérieur dans la région de fixation, ou
c3. s'étend de façon curviligne par rapport à l'axe longitudinal central (518).

10. Composant fabriqué de manière additive (510) selon la revendication 9 avec la caractéristique c1, dans lequel la région élastique (524) présente un espace creux ou une structure de grille.

11. Composant fabriqué de manière additive (510) selon la revendication 9 avec la caractéristique c1 ou la revendication 10, dans lequel la région de paroi (522) dans la région de blocage (520) présente un filetage extérieur.

12. Composant fabriqué de manière additive (560) selon la revendication 9 avec la caractéristique c2, dans lequel la région de blocage (520) et la région de fixation (516) sont espacées l'une des l'autre par un premier évidement (576), dans lequel le premier évidement (576) est conçu de préférence sur une partie de la périphérie.

13. Composant fabriqué de manière additive (510; 560 ; 610) selon l'une des revendications 9 à 12, lequel est constitué de métal ou de plastique.

14. Assemblage de composants constitué d'un premier composant et d'un deuxième composant (1) avec un trou de passage (3), **caractérisé en ce que** le premier composant est un composant fabriqué de manière additive (10 ; 60 ; 110 ; 160 ; 210 ; 260 ; 310 ; 360 ; 410) selon l'une des revendications 1 à 8 et le deuxième composant (1) est fixé au premier composant au moyen d'une vis de fixation (5).

15. Assemblage de composants constitué d'un premier composant et d'un deuxième composant (1) avec un trou de passage (3), **caractérisé en ce que** le premier composant est un composant fabriqué de manière additive (510 ; 560 ; 610) selon l'une des revendications 9 à 13 et le deuxième composant (1) est fixé au premier composant au moyen d'un écrou (7).

16. Procédé de fabrication pour un composant fabriqué de manière additive (10 ; 60 ; 110 ; 160 ; 210 ; 260 ; 310 ; 360 ; 410 ; 510 ; 560 ; 610) selon l'une des revendications 1 à 13, **caractérisé par** les étapes suivantes :
a. mise à disposition d'une dessin tridimensionnel du composant,
b. conversion du dessin tridimensionnel en un modèle de couches lisible par machine et
c. fabrication additive du composant (10 ; 60 ; 110 ; 160 ; 210 ; 260 ; 310 ; 360 ; 410 ; 510 ; 560 ; 610), de préférence en métal.

17. Procédé de liaison d'un premier composant avec un deuxième composant (1) pour la fabrication d'un assemblage de composants selon la revendication 14 ou 15, **caractérisé par** les étapes suivantes :
a. mise à disposition d'un premier composant et d'un deuxième composant (1) avec un trou de passage (3), dans lequel le premier composant est un composant fabriqué de manière additive (10 ; 60 ; 110 ; 160 ; 210 ; 260 ; 310 ; 360 ; 410 ; 510 ; 560 ; 610) selon l'une des revendications 1 à 8 ou 9 à 13, et
b1. lorsque le premier composant est un composant fabriqué de manière additive (10 ; 60 ; 110 ; 160 ; 210 ; 260 ; 310 ; 360 ; 410) selon l'une des revendications 1 à 8, agencement du trou de passage (3) du deuxième composant (1) en concordance avec le trou (14) prévu dans le premier composant (10 ; 60 ; 110 ; 160 ; 210 ; 260 ; 310 ; 360 ; 410) et fixation du premier (10 ; 60 ; 110 ; 160 ; 210 ; 260 ; 310 ; 360 ; 410) et du deuxième composant (1) l'un à l'autre au moyen d'une vis de fixation (5), ou
b2. lorsque le premier composant est un composant fabriqué de manière additive (510 ; 560 ; 610) selon l'une des revendications 9 à 13, agencement du trou de passage (3) du deuxième composant (1) en concordance avec la saillie (514) du premier composant (510 ; 560 ; 610) et fixation du premier (510 ; 560 ; 610) et du deuxième composant (1) l'un à l'autre au moyen d'un écrou (7).
